(19)

**Europäisches Patentamt**

**European Patent Office**

**Office européen des brevets**

(11) **EP 4 074 892 B1**

(12) **EUROPEAN PATENT SPECIFICATION**

(45) Date of publication and mention
of the grant of the patent:
**20.12.2023 Bulletin 2023/51**

(21) Application number: **22168173.7**

(22) Date of filing: **13.04.2022**

(51) International Patent Classification (IPC):
*D21H 27/10* ^(2006.01)     *B32B 27/10* ^(2006.01)
*B32B 29/00* ^(2006.01)     *D21H 17/26* ^(2006.01)
*D21H 17/28* ^(2006.01)     *D21H 17/36* ^(2006.01)
*D21H 19/20* ^(2006.01)     *D21H 19/34* ^(2006.01)

(52) Cooperative Patent Classification (CPC):
**D21H 27/10; B32B 27/10; B32B 27/32;**
**B32B 29/005; D21H 17/26; D21H 17/28;**
**D21H 17/36; D21H 19/20; D21H 19/34;**
B32B 2255/12; B32B 2255/26; B32B 2307/7265;
B32B 2439/70

(54) **USE OF A HIGH-DENSITY PAPER SUBSTRATE, THE COATED HIGH-DENSITY SUBSTRATE AND A LAMINATED PACKAGING MATERIAL AND PACKAGING CONTAINER COMPRISING IT**

VERWENDUNG EINES HOCHDICHTEN PAPIERSUBSTRATS, DAS BESCHICHTETE HOCHDICHTE SUBSTRAT UND EIN LAMINIERTES VERPACKUNGSMATERIAL UND VERPACKUNGSBEHÄLTER DAMIT

UTILISATION D'UN SUBSTRAT DE PAPIER À HAUTE DENSITÉ, SUBSTRAT REVÊTU À HAUTE DENSITÉ ET UN MATÉRIAU D'EMBALLAGE STRATIFIÉ ET RÉCIPIENT D'EMBALLAGE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2021 EP 21168233**

(43) Date of publication of application:
**19.10.2022 Bulletin 2022/42**

(73) Proprietor: **Tetra Laval Holdings & Finance S.A.**
**1009 Pully (CH)**

(72) Inventors:
• **NYMAN, Ulf**
**24192 Eslöv (SE)**

• **ALDÉN, Mats**
**266 31 Munka Ljungby (SE)**
• **MARKBO, Olivia**
**22220 Lund (SE)**
• **NORDSTRÖM, Fredrik**
**652 26 Karlstad (SE)**

(74) Representative: **Tetra Pak - Patent Attorneys SE**
**AB Tetra Pak**
**Patent Department**
**Ruben Rausings gata**
**221 86 Lund (SE)**

(56) References cited:
**WO-A1-2009/112255     WO-A1-2017/089508**

EP 4 074 892 B1

## Description

### Technical field

The present invention relates to the use of a high-density paper substrate made from cellulose fibres, as a gas-barrier material in a laminated packaging material for packaging of oxygen sensitive products, such as oxygen sensitive food products as well as liquid, semi-liquid or viscous food products or water, and further to coated such high-density paper substrates for increased gas barrier properties. The invention further relates to laminated packaging materials comprising the coated or uncoated high-density paper substrates, and to packaging containers comprising the laminated packaging material, for packaging of oxygen-sensitive goods.

### Background of the invention

Packaging containers of the single use disposable type for liquid foods are often produced from a packaging laminate based on paperboard or carton. One such commonly occurring packaging container is marketed under the trademark Tetra Brik® Aseptic and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik® -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most other gas barrier materials. The conventional aluminium-foil based packaging laminate for liquid food aseptic packaging is still the most cost-efficient packaging material, at its level of performance, available on the market today.

Any other material to compete with the foil-based materials must be cost-efficient regarding raw materials, have comparable food preserving properties and have a comparably low complexity in the converting of materials into a finished packaging laminate.

Among the efforts of developing non-aluminium-foil materials for liquid food carton packaging, there is also a general incentive towards developing pre-manufactured films or sheets having high and multiple barrier functionalities, which may replace the aluminium-foil barrier material in the conventional laminated packaging material or combine several separate barrier layers in the laminated material and adapt it to conventional processes for lamination and manufacturing.

Preferred types of such alternative, more environmentally sustainable barrier materials are barrier-coated paper substrates made by aqueous dispersion coating or vapour deposition coating onto thin paper carrier substrates. There are various aqueous dispersion coating processes and vapour deposition coating processes and material recipes for such coatings, and there is a need for cost-efficient barrier materials of "non-foil" type, i.e. non-aluminium-foil, having improved properties for use in packaging laminates for liquid food packaging, regarding barrier properties, in particular towards gases, such as oxygen gas.

An earlier patent publication WO2011/003565A1 discloses a non-aluminium-foil packaging material comprising a pre-coated and metallised paper or cellulose-based substrate for the purpose of induction heat sealing.

The earlier patent publication WO2017/089508A1 discloses how improved barrier properties may be obtained in a similar manner from a metallised paper in a similar packaging laminate, but by selecting a paper substrate providing optimal properties. Such a metallised paper substrate provided not only improved barrier properties, but also indicated better stability of the metallised layer for induction heat sealing purposes.

There remains, however, a need for further improved oxygen gas barrier properties from prior art gas-barrier coated paper substrates. There is also an increased need for improved properties regarding recyclability and environmental sustainability of the materials used for gas-barrier coated paper substrates and laminated packaging materials containing them.

Disclosure of the invention

It is, accordingly, an object to make use of an improved paper substrate contributing to good gas barrier properties of laminated packaging materials comprising the paper substrate, without comprising an aluminium foil ("non-foil"), for the purpose of packaging of oxygen sensitive products.

It is also a general object to provide improved barrier-coated paper substrates providing for or contributing to good gas barrier properties, as well as for improved recyclability and environmental sustainability, of such non-foil laminated packaging materials.

It is a further object to provide non-foil, laminated packaging materials for oxygen-sensitive products, such as liquid, semi-liquid or viscous food products including water, which do not contain aluminium foil but provide good barrier properties and gas barrier properties, in packages made therefrom.

It is a specific object to provide a, relative to aluminium foil barrier materials, cost-efficient, non-foil, paper- or paperboard-based, laminated packaging material, having good gas and water vapour barrier properties, as well as good recyclability and environmental sustainability for the purpose of manufacturing packages for long-term, aseptic storage of liquid food.

It is a further object of the invention to provide a cost-efficient, non-foil, paper- or paperboard-based, mechanically robust and heat-sealable packaging laminate having good gas and water vapour barrier properties and good internal layer adhesion, for the purpose of manufacturing aseptic packaging containers for long-term storage of liquid foods at maintained nutritional quality under ambient conditions.

These objects are attainable according to the present invention by the use of an improved paper substrate, by the barrier-coated such paper substrate, by laminated packaging materials comprising the improved paper substrate or the barrier-coated paper substrate, and by packaging containers made from a laminated packaging material, as defined in the appended claims.

Summary of the invention

According to a first aspect of the invention, there is provided a use of a high-density paper substrate made from cellulose fibres, as a gas-barrier material in a laminated packaging material for packaging of oxygen sensitive products, such as oxygen sensitive food products as well as liquid, semi-liquid or viscous food products or water, wherein the high-density paper substrate has a grammage from 30 to 75 $g/m^2$, as measured according to ISO 536:2012, a density above 1000 $kg/m^3$, as measured according to ISO 534:2011, and is impregnated, at a top-side surface of the paper, with an impregnating composition comprising an impregnating polymer selected from the group consisting of polyvinyl alcohol, PVOH, ethylene vinyl alcohol, EVOH, starch, starch derivatives, carboxymethyl cellulose, nanocrystalline cellulose, NCC, and blends of two or more thereof, wherein the amount of impregnated polymer is from 0.3 to 4.0 $g/m^2$, such as from 0.5 to 4.0 $g/m^2$, such as from 0.5 to 3.0 $g/m^2$, dry weight.

Such a high-density paper substrate is obtainable by impregnating a formed and dried paper at least at the top-side surface with an aqueous impregnating composition, comprising a water-soluble or water-dispersible polymer at a concentration from 5 to 20 weight-%, such as from 5 to 15 weight-%, such as from 7 to 13 weight-%, such as from 8 to 12 weight-%, by a size press or film press operation or the like, and subsequently calendering and drying the thus impregnated paper to a resulting density above 1000 kg/m$^3$. Such a high density is preferably obtained by supercalendering. Accordingly, the high-density paper substrate of the present disclosure is preferably supercalendered. In an embodiment, the density is at least 1050 kg/m$^3$, such as at least 1070 kg/m$^3$. A typical upper limit for the density may be 1300 kg/m$^3$.

In a further embodiment, of the use of the first aspect, the top-side surface of the high-density paper acquired a roughness lower than 100 ml/min Bendtsen, by the calendering operation, which may thus be a supercalendering operation.

By the impregnation of the top-side surface of the paper with an impregnating composition comprising one or more of the listed polymers, the porous network of the cellulose fibres may at least at and beneath the surface of the paper be filled and surrounded by the polymers such that when the paper is calendered, the polymer will keep the fibrous material tighter together with fewer voids in between and in a locked position (by the polymer being slightly more elastic in its properties than the cellulose fibres), thus avoiding open passages between fibres through the material also when the material is mechanically abused, such as folded or twisted. This has firstly a direct impact on gas or oxygen molecules that seek to diffuse through the porous material, by the pore-filling effect of the polymers, which should have good affinity to cellulose, and due to the polymers tying the fibres together in locked positions. There may also be an indrect effect on improving gas barrier properties of the high-density paper substrate, in that the pore-filling polymer evens out the irregularities of the fibrous surface of the paper, such that the surface is prepared to give a non-porous and distinct interface to a further aqeous dispersion barrier coating or polymer extrusion coating. This eliminates any air entrapments at the interface that could otherwise give rise to coating defects or compromise the laminate gas tightness.

According to a second aspect of the invention, there is provided a coated high-density paper substrate, for use as a gas-barrier material in a laminated packaging material for oxygen sensitive products, such as oxygen sensitive food products as well as liquid, semi-liquid or viscous food products or water, wherein the top-side surface of the high-density paper substrate for use according to the first aspect, has at least one coating of at least one gas barrier material to a total coating thickness from 2 to 4000 nm, such as from 2 to 3500 nm.

In one embodiment, the top-side surface of the paper substrate is coated to a dry coating thickness from 100 to 5000 nm (from 0,1 to 5 $\mu$m), such as from 100 to 4000 nm (from 0,1 to 4 $\mu$m), such as from 300 to 3500 nm (from 0,3 to 3,5 $\mu$m), such as from 300 to 2500 nm (from 0,3 to 2,5 $\mu$m), with a gas barrier material comprising a polymer, such as a binder polymer or coating polymer, selected from the group consisting of vinyl alcohol polymers and copolymers, such as from the group consisting of polyvinyl alcohol, PVOH, and ethylene vinyl alcohol, EVOH, starch and starch derivatives, nanofibrillar cellulose /microfibrillar cellulose, NFC/ MFC, nanocrystalline cellulose, NNC, and blends of two or more thereof. The coating of a gas barrier material may be obtained by dispersion or solution coating of an aqueous gas barrier composition and subsequent drying.

According to another embodiment, the gas barrier material may be a water-dispersible polyamide or polyester, or polyvinylidenechloride. Preferably, such water-dispersible polyamides, polyesters or polyvinylidenechlorid are bio-based and/or are capable of reinforcing the oxygen gas barrier properties of the high-density paper substrate by only a very low amount of coating, i.e. a very thin layer of coating, such as below 1 g/m$^2$ or below 1,5 $\mu$m.

In another embodiment, the top-side surface of the paper substrate has a vapour deposition coating of a gas barrier material selected from metals, metal oxides, inorganic oxides and amorphous diamond-like carbon coatings.

The effect of increased oxygen barrier properties are further increased as the impregnated surface of the paper is further coated with a conventional coating layer, which may be very thin but still can provide excellent barrier properties. The gas barrier action of a thin coating, such as coatings provided by dispersion or solution coating of gas barrier compositions, at a few micrometers only, or such as coatings by vapour deposition coating processes like PECVD, PVD, CVD and atmospheric plasma processes at nanometer thicknesses, is reinforced and protected by the effect of the impregnated and pore-filled paper substrate. Moreover, a lower surface roughness of the impregnated paper substrate may be obtained, due to the filled voids and the smoothening layer of a polymer, such that it enables a greatly improved quality of the applied gas barrier coatings, with fewer pinholes and more even thicknesses applied of the coatings. Accordingly, the use of the high-density paper substrate in laminated packaging materials and packages for oxygen barrier purposes provide further and significantly improved results when further coated with coatings of gas barrier materials, due to a combination of positive effects and mechanisms.

According to a third aspect of the invention, an improved laminated packaging material for packaging of oxygen sensitive products, such as oxygen sensitive food products as well as liquid, semi-liquid or viscous food products or water, comprising the high-density paper substrate, or the further gas-barrier-coated high-density paper substrate, is thus provided. The laminated packaging material may further comprise a first outermost liquid tight material layer and a second innermost liquid tight material layer.

For the purpose of carton packaging of liquid or viscous food products, the laminated packaging material may further comprise a bulk layer of paper or paperboard or other cellulose-based material, a first outermost liquid tight, material layer, a second innermost liquid tight material layer and, arranged on the inner side of the bulk layer of paper or paperboard, between the bulk layer and the second innermost layer, the high-density paper substrate or the gas-barrier coated high-density paper substrate. The second innermost liquid-material may further be a heat-sealable material layer.

According to a fourth aspect of the invention there is provided a packaging container for packaging of oxygen sensitive products, such as oxygen sensitive food products as well as liquid, semi-liquid or viscous food products or water, comprising the laminated packaging material of the invention, intended for packaging oxygen sensitive products. In particular, packaging containers for packaging of liquid, semi-solid or viscous food are provided. According to an embodiment, the packaging container is manufactured at least partly from the laminated packaging material of the invention, and according to a further embodiment it is in its entirety made of the laminated packaging material.

The use of the high-density paper substrate as described above, and the provision of further gas-barrier coated such high-density paper substrates, thus provide for improved gas-barrier properties in laminated packaging materials and in packaging containers made thereof, and may also impart thereto improved repulpability and recycling properties, i.e. increased sustainability.

Generally, the use of a high-density paper substrate in such laminated materials and packages provide for a greater proportion of fibre content, which is both of renewable, i.e. non-fossil origin, and possible to recycle or to biodegrade for recirculation of the old materials into creation of new materials. Moreover, the use of such paper substrates as "facing layers in a sandwich configuration, supports the use of bulk materials having a lower bending stiffness, thus being of a lower fibre quality and less expensive or being of lower density and thus using lower amount of fibers, by laminating such facing layers on each side of the bulk layer.

Furthermore, a paper substrate for gas barrier material coatings, in such materials and packages also provides for improved robustness of laminated, pre-cut opening holes, i.e. holes that are pre-cut in the bulk layer but which are subsequently laminated with all other layers of the laminate, including the paper substrate.

Detailed description

With the term "long-term storage", in connection with the present invention, it is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to its adjacent layers, as well as the quality of the individual material layers. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content that optionally may contain pieces of food. Dairy and milk, soy, rice, grains and seed drinks, juice, nectar, still drinks, water, flavoured water, energy drinks, sport drinks, coffee or tea drinks, coconut water, wine, soups, jalapenos, tomatoes, sauce (such as pasta sauce), beans and olive oil are some non-limiting example of food products contemplated.

Example of other oxygen-sensitive food products, possible to package and protect with the laminated packaging materials of the present disclosure are e.g. dry and/or fatty foods. Examples of fatty foods are cheese, butter and spreads. Such packaging may be flow-wrap packaging or form, fill, seal (FFS) packaging, e.g. in bags. It may also be packaging in a jar, tray, lidded spread container, collapsible tube, clam-shell package, sleeve, envelope or wrapper. Another application is use as a packaging window. In these applications, the packaging material typically undergoes folding or a similar type of stress (e.g. creasing, stretching), which make the packaging material based on the high-density paper of the present disclosure particularly suitable.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value, such as for example its vitamin C content, intact.

With the term "bulk layer" is normally meant the thickest layer or the layer containing the most material in a multilayer laminate, i.e. the layer which is contributing most to the mechanical properties and dimensional stability of the laminate and the structural stability of packaging containers folded from the laminate, such as a thick paper, paperboard or carton. It may also mean a layer providing a greater thickness distance in a sandwich structure, which further interacts with stabilising facing layers, which have a higher Young's modulus, on each side of the bulk layer, in order to achieve sufficient such mechanical properties, such as bending stiffness, for achieveing structure stability of formed packaging containers.

Thickness measurements were performed by Transmission Electronic Microscopy using a Titan 80-300, FEI equipment. Samples may be prepared by ultramicrotomy on an EM UC6 Microtome from Leica.

OTR was measured with Oxtran 2/21 (Mocon) equipment based on coulometric sensors, according to ASTM F1927-14 and ASTM F1307-14.See further description of OTR test methods in connection with the Examples.

There is thus provided a use of a high-density paper substrate made from cellulose fibres, as a gas-barrier material in a laminated packaging material for packaging of oxygen sensitive products, such as oxygen sensitive food products as well as liquid, semi-liquid or viscous food products or water, wherein the high-density paper substrate has a grammage from 30 to 75 g/m2, as measured according to ISO 536:2012, a density above 1000 kg/m3, as measured according to ISO 534:2011, and is impregnated, at a top-side surface of the paper substrate, with an impregnating composition comprising an impregnating polymer selected from the group consisting of polyvinyl alcohol, PVOH, ethylene vinyl alcohol, EVOH, starch, starch derivatives, carboxymethyl cellulose, nanocrystalline cellulose, NCC, and blends of two or more thereof, wherein the amount of impregnating polymer is from 0.5 to 4.0 $g/m^2$, such as from 0.5 to 3.0 $g/m^2$, dry weight.

According to an embodiment, impregnation compositions comprise in the majority, i.e. in an amount of at least 50 weight-%, an impregnating polymer selected from PVOH, EVOH starch and starch derivatives, since these materials are relatively easy to handle and to prepare as low viscosity solutions suitable for impregnation, and they are also relatively cost efficient. Impregnating compositions comprising in the majority, i.e. in an amount of at least 50 weight-%, of an impregnating polymer selected from PVOH and EVOH, are preferred, because they normally provide the better oxygen barrier properties in this group.

The degree of hydrolysis of the PVOH may be 96%-100%, such as 97%-100%, such as 97%-99%. A PVOH having a high degree of hydrolysis is less sensitive to water and is preferred, both in production and in use. The weight average molecular weight (Mw) of the PVOH is preferably below 100,000 g/mol, such as 10,000-90,000 g/mol, such as 30,000-80,000 g/mol. Such a relatively low Mw is preferred during impregnation since it has a relatively low viscosity at a relatively high concentration. A PVOH of low Mw has a greater tendency to penetrate into the fiber web or paper substrate rather than staying on the surface of the paper.

The viscosity of the PVOH when measured according to DIN 53015 is preferably below 20 mPa*s, such as 5-16 mPa*s, such as 6-13 mPa*s.

The degree of polymerization (DP) of the PVOH is preferably below 3000, such as 1000-2000. The DP can be determined from the viscosity-average degree of polymerization derived from the viscosity in water. In such case, viscosity is measured in a 4% aqueous solution at 20 °C and determined by Brookfield synchronized-motor rotary type viscometer.

An example of a suitable PVOH is Poval 10/98 from Kuraray, which has a viscosity of 10 mPa*s, a degree of hydrolysis of 98%, a DP of about 1400 and a Mw of about 61,000 g/mol. Another suitable example is Poval 6/98 from Kuraray, which has a viscosity of 6 mPa*s and a degree of hydrolysis of 98%.

In some applications it may be beneficial to select EVOH as the impregnating polymer. EVOH has higher moisture resistance and excellent oxygen barrier properties. An example of a suitable low-viscosity formulation of EVOH is Exceval® AQ-4104 from Kuraray.

As mentioned above, the impregnating composition may comprise a substantial amount of nanocrystalline cellulose, "NCC" (or "CNC"), or a blend of NCC with starch or PVOH, and is adjusted to a viscosity suitable for impregnation. Since NCC is a cellulose and also may provide good oxygen barrier properties, it constitutes an attractive future barrier material in packaging, although it may at present be a less cost efficient alternative for use in bulk quantities.

Nano-crystalline cellulose, NCC, is a form of nano-cellulose but is not the same as "microfibrillar cellulose", "MFC" (CMF) or "nanofibrillar cellulose", NFC (CNF)". Whereas the term "MFC" may in general and incorrectly be used for all types of fibrillated cellulose, the more scientific view is that "MFC" should denote nanoscale cellulose particle fibers or fibrils or fibril aggregates with at least one dimension of less than 100 nm.

MFC may thus contain longer particles, so-called "fibrils" having a width of 10-100 nm, and a length of at least 1 $\mu$m, such as up to 10 $\mu$m, such as longer than 10 $\mu$m.

Both MFC and NFC have an aspect ratio of 50 or above, while NCC may be defined to have an aspect ratio below 50, e.g. in accordance with the draft TAPPI norm WI3021.

The term "NCC", is used for shorter particles and "rod-like" particles, having a width of 3-50 nm, and a length from 100 up towards 1000 nm, such as from 100 to 900 nm, such as from 100 to 500 nm, such as from 100 to 200 nm.

The preferred dimensions of NCC for the purpose of impregnating and filling pores in a formed paper, meaning that the majority of the NCC particles in the composition should have this dimension, may be from 100 to 500 nm length, such as from 100 to 200 nm and with a small width of from 3 to 50 nm.

In an embodiment, the amount of impregnating polymer is from 1 to 2 $g/m^2$, dry weigth. While the top-side may require impregnation by at least 1.5 or 2 $g/m^2$ of the polymer, the back-side may be left un-impregnated. The impregnating composition may comprise substantially only water and the impregnating polymer.

Depending on the choice of the type of cellulose fibres at the back-side, the back-side may be impregnated too. The polymer may be impregnated all they way through the cellulose voids of the whole paper thickness, or only partly into a thickness section of the paper, or into the center/middle of the paper thickness. For optimal gas barrier contribution of the high-density paper substrate, it is believed that as much impregnation by the polymer as possible is desired. The amount of impregnating polymer may, however, need to be balanced versus the repulping properties of the paper, for the paper to be useful in recycling processes after use. It may also be preferred to impregnate both sides of the paper, to avoid that the dry paper substrate curls to cause problems in later coating and lamination operations.

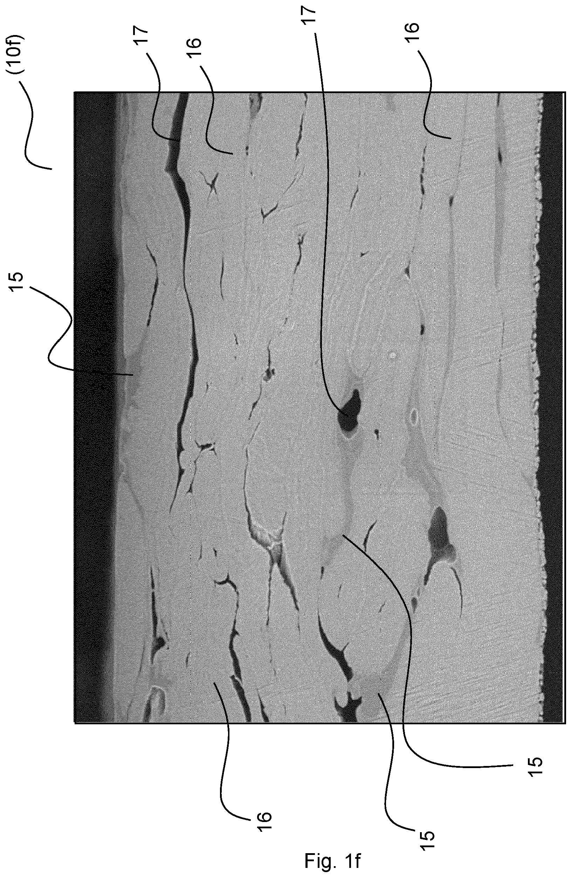

Accordingly, "impregnated" means that the impregnating composition and impregnating polymer to a substantial degree has penetrated the fibre web, i.e. to a substantial degree has penetrated the cellulose fibres of the paper substrate. However, it does not necessarily mean that the fibre web, across its thickness direction, has been completely saturated with the polymer. Consequently, the high-density paper may comprise unfilled pores, especially in the middle. Here it is also referred to the discussion about figure 1f below. Hence, it may be determined by a SEM image of a cross section of the high-density paper that the impregnating polymer has penetrated the fiber web rather than formed a coating layer on the surface. The high-density paper substrate and fibre web is thus impregnated with an impregnating composition comprising an impregnating polymer at an amount from 0.3 to 4.0 $g/m^2$, such as from 0.3 to 3.0 $g/m^2$.

To facilitate the application and impregnation of the polymer, it is water-soluble or water-dispersible.

The degree and depth of the impregnating polymer throughout the thickness of the high-density paper substrate may be studied by taking sliced section samples of the paper and studying them in a SEM microscope. The slicing may be done using e.g. a cryo microtome.

The type of polymer used in the impregnating composition may be determined by FTIR spectroscopy or a combination of FTIR with other spectroscopy methods.

The high-density paper substrate for the use of the invention, may be formed from cellulose fibres comprising at least 50% by dry weight of chemical pulp, such as Kraft pulp or sulphite pulp, such as at least 75% by dry weight chemical pulp, such as at least 85% by dry weight chemical pulp, such as at least 90 % by dry weight chemical pulp, such as at least 95% by dry weight chemical pulp. Sulphate or sulphite pulp is used to obtain a paper that is tough enough for downstream processes, such as coating (that may be carried out at high speed), but also converting and use of the final package.

Sulphate/kraft pulp may be preferred since it is widely produced in large quantities. However, sulphite pulp may also be useful since it is generally more easily refined than sulphate pulp. A higher degree of fibre swelling can be obtained with sulphite pulp, which is a drawback from a drying perspective (the energy demand during drying is higher), but an advantage from a density perspective (swelling improves fibre conformability resulting in a more dense sheet). Kraft pulp is advantageous for improved repulping in recycling, and general dewatering of the fibres. Sulphite fibres normally have a higher proprtion of refined fibres, which may have an effect slightly to the contrary depending on how much and degree of refinement. According to an embodiment of the invention, Kraft pulp may thus be preferred.

The high-density paper substrate may be formed from cellulose fibres comprising 35-100 %, such as 35-80 %, such as 40-70 % of softwood pulp, by dry weight of the pulp used to form the high-density paper, 0-65 %, such as 20-65 %, such as 30-60 % of hardwood pulp and optionally 0-15 %, such as 0-10 %, of CTMP pulp, by dry weight of the pulp used to form the high-density paper. Thus, the high-density paper substrate may be formed from cellulose fibres comprising 35-80 %, such as 40-70 % of softwood pulp, by dry weight of the pulp used to form the high-density paper, 20-65 %, such as 30-60 % of hardwood pulp, and optionally 0-15 %, such as 0-10 % of CTMP pulp, by dry weight of the pulp used to form the high-density paper.

A benefit of including hardwood pulp is that it collapses relatively easy during refining, while it still allows for efficient dewatering in the wire section of the paper machine. A benefit of including softwood pulp is improved runnability in the paper machine and beneficial strength/toughness properties in the resulting paper. The latter properties may be improved by subjecting the softwood pulp to high consistency (HC) refining.

Such compositions of pulps may be advantageous for repulping in recycling and general dewatering properties in the paper manufacturing process, as well as for a high quality of recycled fibres. When the proportion of softwood pulp is relatively high, such as at least 60 %, such at least 70 %, it is beneficial if the Schopper-Riegler (SR) number, measured according to ISO 5267-1:1999, of the pulp used in the manufacturing of the paper, is from 25 to 35. Such SR number may facilitate sufficiently high density without causing problems in dewatering and/or recycling and may be obtained by adjusting the degree of low consistency (LC) refining.

If the SR number is above 35, it will be difficult to dewater the diluted pulp in the forming section at sufficient speed. If the SR number is below 25, the properties of the final product will typically be inferior. If the consistency of the diluted pulp is above 0.9%, there is a risk that the paper will be too porous and the paper surface too rough, for producing an impregnated high-density paper substrate for use of the invention.

When the proportion of hardwood pulp in the furnish is relatively high, such as at least 65% by dry weight hardwood pulp, such as at least 75% by dry weight hardwood pulp, the Schopper-Riegler (°SR) number measured according to ISO 5267-1:1999 may be from 33 to 45. Such SR number may facilitate sufficiently high density without causing problems in dewatering and/or recycling and may be obtained by adjusting the degree of low consistency (LC) refining.

The pulp may be diluted to a consistency of 0.1%-0.5%, such as 0.1%-0.4%, to reduce fibre flocculation, which decreases the porosity of the finally formed paper.

Preferably, the softwood fibres used in the high-density paper substrate have been subjected to high consistency (HC) refining, such that the fibers gain some inherent ductility or stretchability in the high-density paper substrate.

When softwood pulp is used, it may thus have been subjected to high consistency (HC) refining, i.e. refining at a consistency of 20%-40%, such as 25%-38%, i.e. weight concentration dry fibre in the pulp. The specific energy of the HC refining step may be at least 100 kWh/tonne, such as at least 150 kWh/tonne, such as 150-300 kWh/tonne. The "tonne" of the unit means tonne of dry fiber.

The pulp may be bleached. Thereby the concentration of elements or compounds that may give rise to taint and/or odour in the final package is reduced.

The high-density paper may thus be formed by providing a pulp comprising at least 50 % by dry weight of chemical pulp, such as Kraft pulp or sulphite pulp, having a Schopper-Riegler from 25 to 50, such as from 25 to 45, such as from 25 to 35, diluting the pulp to a low consistency of from 0.1 to 0.9 %, and forming a paper web from the diluted pulp in a forming section, and dewatering the formed paper web in a press section, to obtain an intermediate dry matter content. The pulp may comprise less than 10 %, such as less than 5 % by dry weight of pigments or inorganic filler, such as less than 3 %, such as less than 1 %, such as virtually no pigments or inorganic filler, by dry weight, for further improving repulpability and dewatering properties. Silica or bentonite used as retention agent, typically in an amount of less than 1 kg per tonne dry pulp, is not considered to be inorganic filler. Accordingly, the ash content according to ISO 2144:2015, of the pulp is preferably less than 5%, such as less than 3%, such as less than 1%.

The paper web formed is then dried in a drying section and may be dried to a low moisture content of from 4 to 7 %, for subsequent surface impregnation with an aqueous composition comprising a water-dissolvable or water-dispersible polymer in a size-press or film-press operation, or the like. The reduction of the moisture content before the impregnation, makes it possible to fill the pores of the web.

The impregnating step may comprise adding an aqueous composition comprising the impregnating polymer to each side of the paper substrate. The viscosity measured at 60°C of the aqueous composition may be 55-90 mPa*s. Such a relatively low viscosity facilitates penetration of the polymer into the fiber web. The concentration of the impregnating polymer in the aqueous composition is preferably 7.0%-13.0% (w/v), such as 8.0%-12.0% (w/v).

The 60°C viscosity measurement is preferably carried out using a Brookfield rotational viscometer equipped with spindle no.3 at 100 rpm.

To facilitate the densification and the impregnation, the impregnated paper is subsequently dried to a moisture content of 10-30 %, such as 11-20 %, e.g. by heated cylinders or by hot air, before being subjected to calendering in a calendering unit comprising at least two heated nips. The calendering operation may be performed in at least one super-calender having from 8 to 20 calender rolls, such as from 9 to 19 rolls, such as from 11 to 17 rolls, and some moisture, such as to a moisture content of from 11 to 20 %, may be applied to the paper web again just before the calendering operation. The total nip impulse of the supercalendering step may be at least 600 kPa*s. The temperature of the surfaces of heated calender rolls may be 120-160 deg C.

The moisture content of the paper web facilitates the calendering operation and thereby provides for increased density, decreased porosity and improved surface properties in the final paper.

There is no calendering carried out prior to the impregnation operation.

During the calendaring, the paper is dried out. Excess drying is possible by carrying out additional drying immediately after the calendering (i.e. prior to the reel). Air dryers can be used for such additional drying. With this set-up, a moisture content below 4% can be achieved, which may be advantageous in later performed coating operations, such as in vapour deposition coating operations.

In order to obtain a paper that forms an oxygen barrier, the number and the size of the pores must be significantly reduced. By extensive refining of the pulp, the degree of fibre bonding will increase and thus reduce the porosity. Greaseproof paper, that is produced by such extensive refining, has sufficiently low porosity to provide a grease barrier. Greaseproof paper has thus been seen as a potential substrate or carrier for an additional gas-barrier coating. The resulting pulp has, however, high dewatering resistance and demands long time for stock dewatering and is both costly in its manufacturing process and undesired in repuling and recycling processes. Moreover, it needs further improvement also regarding gas-barrier contribution properties. The same is valid regarding parchment papers, which in their manufacturing acquire gelatinized fibres by passing a bath of sulphuric acid, which makes the fibres less dewaterable and repulpable, and moreover the parchment papers acquire undesired brittleness.

A different approach to the filling of voids in fibrous cellulose materials is the use of microfibrillar cellulose (MFC) as a major constituent of cellulosic material in a sheet or film, which also provide some oxygen barrier properties. The dewatering resistance of such materials is, however, also high, which may cause similar problems both in manufacturing and in recycling processes. Thus, for the purpose of the present invention, it is not desirable to use high-density papers into which is included MFC, or other types of nanocellulose, in substantial quatities in the pulp for the manufacturing of the paper. Moreover, MFC is not suitable as an impregnating composition of a formed and dried paper, since it in aqueous composition forms a gel, rather than a solution or low-viscosity dispersion.

The high-density paper of the present disclosure may thus be obtained without extensive low consistency (LC) refining, which improves the speed of the paper-manufacturing process (and reduces its energy consumption) and facilitates recycling. Such a comparatively limited refining can be reflected by the drainability measured after repulping.

The cellulose fibres of the high-density paper substrate may exhibit a Canadian Standard Freeness, CSF, value above 200 ml, such as from 200 to 500 ml, such as from 220 to 450 ml, such as from 300 to 450 ml, as measured according to ISO 5267-2:2001, after repulping according to the Valmet repulping method carried out in a Valmet pulper of the type HD400. The Valmet repulping method comprises the re-pulping of 0.5 kg of air-dried high-density paper, cut into 90 by 90 mm (0.09 by 0.09 m) pieces, together with 15 litres of water at 57 deg C in a Valmet pulper at a rotating speed of 3000 rpm, for 20 minutes. The CSF values of the studied high-density paper substrates are significantly different from those of the best known paper of the prior art, which comprise a higher content of refined fibres to provide a more dense, i.e. less porous, fibrous structure in the paper.

Expressed differently, as a drainability value, the high-density paper substrate may provide a Schopper-Riegler (°SR) number measured according to ISO 5267-1:1999 of from 30 to 50, such as from 33 to 50, such as from 35 to 45, after repulping according to the standard method of ISO 5263-1:2004. In this case, the SR numbers of the studied high-density papers are substantially lower, than for the paper substrates used in the prior art.

Both CSF and SR values measure the dewatering properties of the fibres in a cellulose fibre pulp and indicate how easy or difficult it would be to repulp and recycle the fibers from the high-density paper substrates, and thereby also the laminated packaging materials comprising the paper substrates.

The high-density paper substrate being formed from cellulose fibres may along the same lines of reasoning provide a mean fines content, as measured with a L&W Fibretester+ (ABB, Lorentzen & Wettre, Sweden), of less than 40 %, such as less than 35 %, such as less than 32 %, as measured according to to ISO 16065-2:2014 after repulping according to ISO 5263-1:2004, wherein fines are defined as fibrous particles shorter than 0.2 mm. The content of fines after repulping of e.g. greaseproof papers would normally be higher, such as above 40 %, such as at least above 35 %, due to the manufacturing process of such papers using pulp with high content of refined fibres. A typical lower limit for the mean fines content is 15% or 20%.

According to an embodiment, a high-density paper substrate is used, which is impregnated from the top-side and subsequently calendered to a roughness of the top-side surface lower than 100 ml/min Bendtsen, such as lower than 80 ml/min Bendtsen, such as from 7 to 80 ml/min Bendtsen, such as from 7 to 50 ml/min Bendtsen, such as from 7 to 30 ml/min Bendtsen, such as from 7 to 25 ml/min Bendtsen, such as from 7 to 20 ml/min Bendtsen as measured according to SS-ISO 8791-2:2013. A typical lower limit may be 5 or 7 ml/min Bendtsen.

A lower surface roughness provides for a perfect interface to subsequently applied adjacent layers and coatings, with a reduced number of imperfections such as pinholes, and unevenness of the coating layer. Consequently, the coating or further layer may be made at a higher quality, or at a lower thickness, or both. For a same coating thickness of a gas barrier coating, better oxygen barrier properties are thus obtained in the coating itself.

A different measurement of the surface roughness is the Parker Print Surface (PPS) roughness, which should exhibit values such as in the range from 1.0 to 2.0 $\mu$m, such as from 1.2 to 1.8 $\mu$m, as measured according to SS-ISO 8791-4:2013.

Furthermore, the Gurley value according to ISO 5636-5:2013 of the high-density paper substrate may be above 220 s. The significance thereof that the surface of the high-densty paper substrate is closed, i.e. it does not entrap any air or oxygen among fibres at the surface.

The impregnating step is preferably carried out by means of a size press or a film press. A film press is the most preferred equipment. If the film press is of the two-sided type, a back-side impregnation of the paper web can be performed as well, for further reduction of the porosity of the finally provided high-density paper substrate, and/or for curl control. The film press may be an OptiSizer Film (Valmet) or a SpeedSizer (Voith). After the film press, the web is dried to a moisture content of 12%-25%, preferably about 15%. This drying is preferably carried out by contactless drying, preferably using hot air, until the primer is not sticking to hot metal surfaces followed drying by steam-heated cylinders. The paper may curl due to impregnation of the impregnation composition only from one side of the paper. Impregnation from both sides of the paper may thus better provide for a flat balanced high-density paper substrate.

Thus, the high-density paper substrate may further, at an opposite, back-side surface of the paper, be impregnated with an impregnating composition comprising an impregnating polymer selected from the same group as for the top-side surface of the paper. The paper may thus be impregnated from the back-side and subsequently calendered to a roughness of the back-side surface lower than 200 ml/min Bendtsen, such as lower than 150 ml/min Bendtsen, as measured according to SS-ISO 8791-2:2013.

The amount of the impregnating polymer, at the top-side surface of the high-density paper, may thus be from 0,3 to 4 g/m$^2$, such as from 0,3 to 3 g/m$^2$, such as from 0,3 to 2 g/m$^2$, such as from 0,5 to 3 g/m$^2$, such as from 0,5 to 2 g/m$^2$, based on dry weight.

The impregnating composition may comprise a water-soluble or water-dispersible impregnating polymer selected from polyvinyl alcohol, PVOH, and ethylene vinyl alcohol, EVOH, optionally further comprising a crosslinking agent, such as glyoxal, at a weight ratio from 100:3 to 100:12. Preferably the impregnating composition is an aqueous solution of the polymer having a low molecular weight and thereby a low viscosity. Examples of PVOH suitable formulations are low-viscosity grades of Poval$^®$ from Kuraray. An example of a low-viscosity formulation of EVOH is Exceval$^®$ AQ-4104 from Kuraray. The degree of hydrolysis of a PVOH should be as high as possible, such as 98 or 99 %, and a PVOH with low molecular weight may similarly be preferable for best possible impregnating effect. In a further embodiment, the impregnatiing polymer may be starch or a starch derivative such as chitosan or the like, in aqueous solution. Anionic starch solutions are suitable due to having good affinity to cellulose.

In an embodiment, the impregnating polymer for the back-side surface of the high-density paper may also be selected from polyvinyl alcohol, PVOH, and ethylene vinyl alcohol, EVOH, in aqueous solution, optionally further comprising a crosslinking agent, such as glyoxal, such as at a weight ratio of PVOH to glyoxal from 100:3 to 100:12, such as from 100:3 to 100:8.

In another embodiment, the impregnating polymer for the back-side surface of the high-density paper may instead be starch or a starch derivative such as chitosan or the like, in aqueous solution, to improve the repulpability of the paper substrate A further advantage is that the paper substrate does not stick back-to-top surfaces when wound-up on a reel for transport and storage.

The impregnating composition may further comprise low amounts of inorganic particles selected from the group consisting of clays, such as bentonite, kaolin or baryte, and talcum, CaCO3, or silica particles, in addition to the impregnating polymer. The particle size should be as small as possible for better impregnation properties, but may still support the filling of the voids between the cellulose fibres, together with the impregnating binder polymer of the impregnation composition.

The impregnating composition may penetrate the paper substrate web in the direction of its thickness fully or at least partly. Impregnation may be performed both from the top-side and from the back-side of the paper, partly or fully into the center of the paper.

The grammage of the high-density paper substrate may in an embodiment be from 30 to 65, such as from such as at from 35 to 60 g/m$^2$, such as at from 35 to 50 g/m$^2$, such as at from 35 to 45 g/m$^2$.

The thickness of the high-density paper substrate may be from 35 to 65 $\mu$m, such as from 35 to 60 $\mu$m, such as from 35 to 50 $\mu$m, such as from 35 to 45 $\mu$m.

It has been seen that for some uses, such as for liquid-tight packaging of wet or liquid or viscous products, it may be advantageous to use an as thin as possible high-density paper substrate, because then less polymer may be needed in adjacent liquid-tight layers, or heat-sealable layers.

According to a specific embodiment, a high-density paper substrate having a top ply and a bottom ply, i.e. a two-ply configuration, may be used. By such a high-density paper substrate its properties may be better tailor-made to its needs. In such a construction, the properties of the top ply may be tailored for receiving another barrier layer, while the bottom ply properties are tailored for strength/toughness. Alternatively, the top ply may be tailored for printing, while the bottom ply is coated with a further layer(s). Hardwood pulp may provide an improved surface for printing or another barrier layer. Softwood pulp may improve the runnability in the paper machine and provides beneficial strength/toughness properties in the resulting paper product.

For example, the top ply may be formed from at least 50% by dry weight hardwood pulp, such as at least 65% by dry weight hardwood pulp, such as at least 75% by dry weight hardwood pulp, to enable a more dense and smooth top-side surface of an impregnated and calendered high-density paper.

On the other hand, the bottom ply may be formed from at least 50% by dry weight softwood pulp, such as at least 65% by dry weight softwood pulp, such as at least 75% by dry weight softwood pulp. This may enable easier dewatering and repulping properties, or may simply make the paper cheaper to manufacture. If impregnation also of such a back-side surface is desired, a higher amount of impregnating composition or impregnating polymer may be needed.

The two-ply high-density paper may be encompass method steps wherein a first wire is used to form a first web that becomes the top ply and a second wire is used to form a second web that becomes the second ply, and wherein the first and second webs are couched together.

The first web may be formed from a first furnish comprising at least 50% by dry weight hardwood pulp, such as at least 65% by dry weight hardwood pulp, such as at least 75% by dry weight hardwood pulp. The head box consistency of the first furnish may be 0.12%-0.60%, such as 0.18%-0.35%.

The Schopper-Riegler (°SR) number measured according to ISO 5267-1:1999 of the first furnish in the head box may be 33-45. Such a SR number may facilitate a sufficiently high density without causing dewatering and/or recycling problems and may be obtained by adjusting the degree of low consistency (LC) refining.

The second web may be formed from a second furnish comprising at least 50% by dry weight softwood pulp, such as at least 65% by dry weight softwood pulp, such as at least 75% by dry weight softwood pulp. This softwood pulp preferably has been subjected to high consistency (HC) refining (suitable specific energies are discussed above). The head box consistency of the second furnish may be 0.06%-0.40%, such as 0.10%-0.25%.

In one embodiment, the head box consistency of the second furnish is lower than the head box consistency of the first furnish.

The Schopper-Riegler (°SR) number measured according to ISO 5267-1:1999 of the second furnish in the head box may be 25-35. Such a SR number may facilitate sufficiently high density without causing dewatering and/or recycling problems and may be obtained by adjusting the degree of low consistency (LC) refining.

Preferably, the furnishes comprises less than less than 2% by weight inorganic filler, such as less than 1% by dry weight inorganic filler, such as substantially no inorganic filler.

In the manufacturing of the two-ply paper, there may optionally be applied a further, interjacent coating or addition of starch or PVOH before couching the top ply and the the bottom ply together.

The density of the high-density paper substrate may be from 1050 to 1500 kg/m$^3$, such as from 1100 to 1400 kg/m$^3$, such as from 1100 to 1300 kg/m$^3$. The impregnating composition comprising a polymer in aqueous solution helps to lock the fibrous network in a locked position as it is subsequently calenderedand dried. The densification of the paper provides both direct and indirect gas barrier by the use of such a paper substrate and is the key to the successful results of the present invention.

The high-density paper substrate may have a tear resistance index measured in the machine direction (MD) according to ISO 1974:2012 of at least 4.1 mNm$^2$/g, such as at least 4.4 mNm$^2$/g.

Further, the high-density paper substrate may have a tear resistance index measured in the cross direction (CD) according to ISO 1974:2012 of at least 4.9 mNm$^2$/g, such as at least 5.3 mNm$^2$/g. Typical upper limits in MD and CD may be 6.5 mNm$^2$/g and 7.5 mNm$^2$/g, respectively. The paper thus has a higher tear resistance, also indicating lower brittleness, which is advantageous in converting and handling of the paper in lamination as well as in the general performance of the laminated packaging material.

The tensile stiffness index of the high-density paper substrate may be from 10 to 15 kNm/g in the MD and from 3 to 7 kNm/g in the CD. Thereby, the paper can make an efficient contribution to the rigidity of the final package when it is used as a layer in a packaging material. In the present disclosure, tensile stiffness index is measured according to ISO 1924-3:2011.

The tensile strength index of the high-density paper substrate may be at least 90 Nm/g, such as at least 100 Nm/g, in the MD and at least 35 Nm/g, such as from 35 Nm/g to , in the CD. In the present disclosure tensile strength index is measured according to ISO 1924-3:2005.

A higher tensile strength index may indicate a paper substrate, useful to withstanding web handling forces during coating and lamination operations.

Preferably, the beneficial barrier and recycling properties are obtained without sacrificing strength, such as tensile strength and tear strength .

A coated high-density paper substrate, for a gas-barrier material in a laminated packaging material for oxygen sensitive products, may be provided from using any one of the above embodiments of a high-density paper substrate, wherein its top-side surface has at least one coating of at least one gas barrier material to a total coating thickness from 2 to 4000 nm, such as from 2 to 3500 nm. Such thin coatings will not produce reject or waste when the used laminated packaging materials comprising such coatings are recycled in the existing cellulose fibre recycling streams and they do further not consume much material in relation to the benefit that they provide.

The top-side surface of the high-density paper substrate may according to one embodiment be coated to a dry coating thickness from 100 to 5000 nm (from 0,1 to 5 $\mu$m), such as from 100 to 4000 nm (from 0,1 to 4 $\mu$m), such as from 300 to 3500 nm (from 0,3 to 3,5 $\mu$m), such as from 300 to 2500 nm (from 0,3 to 2,5 $\mu$m), with a gas barrier material comprising a polymer selected from the group consisting of vinyl alcohol polymers and copolymers, such as from the group consisting of polyvinyl alcohol, PVOH, and ethylene vinyl alcohol, EVOH, and further from starch and starch derivatives, nanofibrillar cellulose/ microfibrillar cellulose, NFC/ MFC, nanocrystalline cellulose, NCC, and blends of two or more thereof. Such thin coatings are obtained by dispersion or solution coating of a gas barrier material comprised in an aqueous gas barrier composition and subsequent drying and cannot be applied at such thin coating thicknesses by any alternative method, such as extrusion coating. Polymers and substances may be applied as solutions or dispersions in organic solvents other than water, but such methods are generally not relevant for the provision of environmentally sustainable packaging materials of the future.

In a preferred embodiment, a coating of from 0,5 to 3,5 g/m$^2$, such as from 1 to 3 g/m$^2$, PVOH is applied on the top-side surface of the high-density paper substrate.

Further, when the gas barrier material coating is formed by coating and subsequent drying a dispersion or solution of a gas barrier composition, further comprises a laminar compound, such as a nano-dimensional laminar clay, talcum or CaCO3.

According to another embodiment, the coated high-density paper substrate has, on its top-side surface a vapour deposition coating of a gas barrier material selected from metals, metal oxides, inorganic oxides and amorphous diamond-like carbon coatings. The vapour deposition coating may more specifically be selected from the group consisting of an aluminium metallisation coating and aluminium oxide, AlOx. Preferably it is an aluminium metallisation coating.

In a further embodiment, the coated high-density paper substrate has on its top-side surface a first coating of a gas barrier material formed by coating and subsequent drying of a dispersion or solution of an aqueous gas barrier composition, and further a vapour deposition coating of a gas barrier material selected from metals, metal oxides, inorganic oxides and amorphous diamond-like carbon, applied on the first coating.

The coated high-density paper substrate wherein a gas barrier material is coated by vapour deposition coating onto the top-side surface of the paper substrate and is applied to a thickness of from 2 to 80 nm, such as from 2 to 50 nm, such as from 2 to 45 nm.

A coated high-density paper substrate may further be provided, wherein the back-side of the paper substrate is also coated with at least one coating of at least one gas barrier material as defined in any of the above embodiments.

The vapour deposited barrier coating to finally be coated onto the top-side surface of the high-density paper, is applied by means of physical vapour deposition (PVD) or chemical vapour deposition (CVD), for example by plasma enhanced chamical vapour deposition (PECVD).

Generally, below 5 nm the barrier properties may be too low to be useful and above 200 nm, such as above 100 nm, such as above 50 nm, depending on the type of vapour deposition coating, the barrier coating may be less flexible and, thus, more prone to cracking when applied onto a flexible substrate and would also cost more.

Other examples of vapour deposition coatings are aluminium oxide (AlOx, $Al_2O_3$) and silicon oxide (SiOx) coatings. Generally, PVD-coatings of such oxides are more brittle and less suitable for incorporation into packaging materials by lamination, while metallised layers as an exception do have suitable mechanical properties for lamination material despite being made by PVD.

Normally, an aluminium metallised layer inherently has a thin surface portion consisting of an aluminium oxide due to the nature of the metallisation coating process used.

In an embodiment, such an aluminium metallised layer has been applied to an optical density (OD) of from 1.8 to 2.5, preferably from 1.9 to 2.2. At an optical density lower than 1.8, the barrier properties of the metallised film may be too low. At above 2.5, on the other hand, the metallisation layer may become brittle, and the thermostability during the metallisation process will be low due to higher heat load when metallising the substrate film during a longer time. The coating quality and adhesion may then be negatively affected.

Other coatings may be applied by means of a plasma enhanced chemical vapour deposition method (PECVD), wherein a vapour of a compound is deposited onto the substrate under more or less oxidising circumstances. Silicon oxide coatings (SiOx) may, for example, also be applied by a PECVD process, and may then obtain very good barrier properties under certain coating conditions and gas recipes.

DLC defines a class of amorphous carbon material (diamond-like carbon) that displays some of the typical properties of diamond. Preferably, a hydrocarbon gas, such as e.g. acetylene or methane, is used as process gas in a plasma for producing a coating of amorphous hydrogenated carbon barrier layer applied by a PECVD vacuum process, i.e. a DLC. DLC coatings applied by PECVD under vacuum provide good adhesion to adjacent polymer or adhesive layers in a laminated packaging material. Particularly good adhesion to adjacent polymer layers, are obtained with polyolefins and in particular polyethylene and polyethylene-based co-polymers.

A laminated packaging material for packaging of oxygen sensitive products, such as oxygen sensitive food products as well as liquid, semi-liquid and viscous food or water, of the third aspect thus comprises a high-density paper substrate as defined in any one of embodiments of the first aspect, or the coated high-density paper substrate according to any one of the embodimetns of the second aspect, and comprises further a first outermost layer of a liquid tight material and a second innermost layer of a liquid tight material. The second innermost layer may further be a liquid tight, heat sealable material.

The laminated packaging material may further comprise a bulk layer of paper or paperboard or other cellulose-based material and have the high-density paper substrate, or the coated high-density paper substrate, laminated between the bulk layer and the second innermost layer.

When the high-density paper substrate is also coated with a vapour deposition coating, which normally also adds some further water vapour barrier properties to the coated paper, there is normally no need to add further gas or water vapour barrier material layers into the total laminated structure.

When the top-side surface of the high-density paper substrate has a first coating of a gas barrier material formed by coating and subsequent drying of a dispersion or solution of an aqueous gas barrier composition, such as PVOH, and further has a vapour deposition coating of a gas barrier material selected from metals, metal oxides, inorganic oxides and amorphous diamond-like carbon, such as an aluminium metallisation coating, applied on the first coating, a very good material is obtained, which may be used to replace a conventional aluminium foil of micrometer thickness (greater than 5 $\mu$m, such as 6 $\mu$m, as a single oxygen barrier material in a laminated packaging material.

In a further embodiment, the high-density paper substrate, or coated high-density paper substrate, may be laminated to the bulk layer by from 0.5 to 5 g/m$^2$ of an interjacent bonding composition comprising a binder selected from the group consisting of acrylic polymers and copolymers, starch, starch derivatives, cellulose derivatives, polymers and, copolymers of vinyl acetate, copolymers of vinyl alcohol, and copolymers of styrene-acrylic latex or styrene-butadiene latex. Such a low amount of an interjacent bonding composition is only possible to apply by aqueous dispersion or solution coating of a polymer binder, and is not possible to apply by extrusion coating or extrusion lamination of a polymer melt. Since the surfaces of the layers to be bonded together are both made of cellulose, such wet lamination is made by the absorption of the aqueous medium into the respective cellulose layers, and thus the formation of a thin and dry bonding layer at the interface between the two layers.

The laminated packaging material may have a pre-manufactured polymer film laminated between the high-density paper substrate or coated high-density paper substrate, and the second innermost liquid tight material layer, for improved robustness of the mechanical properties of the laminated packaging material. A pre-manufactured film has a higher degree of orientation of the polymer of which it is made, and thus has different mechanical properties to a merely extrusion coated or extrusion laminated layer of the same or corresponding polymer. Thus, by incorporating such a film in the structure, the laminated material alttogether may be made stronger and better resistant to any downstream tough treatment of the material. It is preferable to avoid such pre-manufactured films in the material, as they add costs both from sourcing of materials point of view and from the lamination operation point of view. Pre-manufactured films may have different mechanical properties and may be ranging from biaxally oriented, tough films obtained by mere extrusion cast films to films manufactured by film blowing and inherent polymer orientation occuring in that process, or with additional subsequent orientation. It is, however, preferred to use polymer materials that are merely extrusion coated or extrusion laminated.

The second innermost layer of a liquid tight, heat sealable material may be a polyolefin, preferably a blend of low density polyethylene, LDPE, and metallocene-catalysed linear low density polyethylene, m-LLDPE. This is the type of polymer most used today for the innermost layer, for best balanced liquid tightness and heat sealability properties, and which generates best possible package integrity of heat sealed packaging containers. By choosing the composition of this layer carefully, the amount of polymer in this layer may be optimised to be as low as possible while still producing strong and reliable packages filled with product.

In one embodiment, the second innermost liquid tight, heat sealable material layer may be, or comprise, a pre-manufactured polymer film, the film comprising a heat-sealable thermoplastic polymer material and, optionally, a further layer of a material for providing improved robustness of the mechanical properties of the laminated packaging material.

In a specific embodiment, the laminated packaging material may have a pre-manufactured polymer film substrate laminated on the inner side of the high-density paper substrate or coated high-density paper substrate, i.e. on the side of the paper substrate which is opposite to the side that is laminated to the bulk layer, wherein the pre-manufactured polymer film substrate has a vapour deposition coating of a gas barrier material selected from metals, metal oxides, inorganic oxides and amorphous diamond-like carbon coatings.

The laminated packaging material may according to a different specific embodiment have a pre-manufactured polymer film substrate laminated on the inner side of the paper substrate or coated high-density paper substrate, i.e. on the side of the paper substrate which is opposite to the side that is laminated to the bulk layer, wherein the pre-manufactured polymer film is filled with an inorganic laminar compound to provide the polymer film with gas and vapour barrier properties.

According to yet another specific embodiment, the laminated packaging material may have a pre-manufactured polymer film substrate laminated on the inner side of the high-density paper substrate or coated high-density paper substrate, i.e. on the side of the high-density paper substrate which is opposite to the side that is laminated to the bulk layer, wherein the pre-manufactured polymer film has been coated and subsequently dried, by a gas barrier material obtained by dispersion or solution of a gas barrier material composition to a dry coating thickness from 100 to 4000 nm (from 0,1 to 4 $\mu$m), such as from 300 to 3500 nm (from 0,3 to 3,5 $\mu$m), such as from 300 to 2500 nm (from 0,3 to 2,5 $\mu$m).

The purpose of any one of the previously listed specific emodiments, is to add complementary properties to the laminated packaging material, when using merely the high-density paper substrate as such, as a gas barrier material in the laminate structure, or when using a coated such high-denisty paper substrate, or wherein the applied coating provides only some gas barrier properties, or when the coating has only moisture-sensitive gas barrier materials. By laminating the coated high-density paper to a further polymer film, which adds some further more moisture-resistant oxygen barrier properties, or at least water vapour barrier properties, the at least two different gas barrier materials may interact to provide further enhanced total barrier properties to the total laminate structure. The necessary bonding layer between the high-density paper substrate and the further barrier film ensures such enhanced barrier properties and may promote them to a synergetical level, since the interjacent bonding layer acts as a "cushion" and further "gas or vapour migration stopper" in the laminated strucutre.

The outer- and innermost, liquid-tight layers and the lamination layers in the interior of the laminate structure, do not normally add high barrier properties to migrating gas molecules or small molecules. Their purpose is to provide a direct barrier to water in liquid form from penetrating through to the cellulose-based bulk material and other paper layers. The liquid barrier layers also prevent water vapour from migrating to the cellulose to the extent that it gets wet, but are not capable of keeping the moisture content of the laminated structure at zero or at the low level of "dry" paper (which is at about 7-8 % in an environment at ambient temperature, i.e. at 23 deg C, and 50 % relative humidity, RH). The moisture content in the laminated carton material of a packaging container filled with liquid is usually rather high and migration through the material occurs, unless there is a further water vapour barrier included, such as an aluminium foil, a vapour deposited metallisation layer, other vapour deposition coating, inorganic material layer or other polymer material layer.

In any of the previously listed embodiments involving a pre-manufactured film, the pre-manufactured polymer film may comprise a polymer selected from any one of polypropylene, polyethylene, blends thereof and copolymers of ethylene and propylene and optionally a further comonomer. According to a further embodiment the pre-manufactured polymer film may comprise a polymer selected from high density polyethylene or a linear low density polyethylene.

In any of the previously listed embodiments, the laminated packaging material may in addition comprise a further high-density paper substrate or coated high-density paper substrate, laminated between the bulk layer and the first outermost layer.

In a different embodiment, the laminated packaging material may instead further comprise a bulk layer of paper or paperboard or other cellulose-based material and have a high-density paper substrate or coated high-density paper substrate, laminated between the bulk layer and the first outermost layer.

The top-side surface of the high-density paper substrate may be coated with a printable surface coating for the purpose of being printed and be directed towards the first outermost layer in the laminated packaging material.

Alternatively, the top-side surface of the high-density paper substrate may be coated with an aluminium metallization coating and be directed towards the first outermost layer in the laminated packaging material.

At the same time, the high-density paper substrate adds gas barrier properties and other barrier properties on the outside of the laminated packaging material, which may be important for the function of the laminated packaging material and packaging containers for oxygen sensitive products made from the laminated packaging material.

A paper or paperboard bulk layer for use in the invention usually has a thickness of from about 100 $\mu$m up to about 600 $\mu$m, and a surface weight of approximately 100-500 g/m$^2$, preferably about 200-300 g/m$^2$, and may be a conventional paper or paperboard of suitable packaging quality.

For low-cost aseptic, long-term packaging of liquid food, a thinner packaging laminate may be used, having a thinner paper core layer. The packaging containers made from such packaging laminates are not fold-formed and more similar to pillow-shaped flexible pouches. A suitable paper for such pouch-packages usually has a surface weight of from about 50 to about 140 g/m$^2$, preferably from about 70 to about 120 g/m$^2$, more preferably from 70 to about 110 g/m$^2$. As the high-density paper substrate used in this invention in itself may contribute with some stability to the laminated material, it may replace the paper layer corresponding to a "bulk" layer in such pouch material.

The high-density paper substrate may be bonded to the bulk layer by an intermediate adhesive, or thermoplastic polymer bonding layer, thus binding the un-coated surface of the barrier-coated paper to the bulk layer. According to an embodiment the bonding layer is a polyolefin layer, such as in particular a layer of a polyethylene-based polyolefin copolymer or blend, including in the majority ethylene monomer units. The bonding layer may be binding the bulk layer to the barrier-coated cellulose-based substrate by melt extrusion laminating the bonding polymer layer between a web of the bulk layer and a web of the cellulose-based substrate, and simultaneously pressing the three layers together while being forwarded through a lamination roller nip, thus providing a laminated structure by extrusion lamination.

In another embodiment, the barrier-coated cellulose-based substrate may thus be bonded to the bulk layer by wet application of an aqueous dispersion of an adhesive composition comprising an adhesive polymer binder onto one of the web surfaces to be laminated and pressing the two paper webs together while they are forwarded through a lamination roller nip, thus providing a laminated structure by wet lamination. The moisture of the aqueous adhesive composition is absorbed into the fibrous cellulose network of the two paper layers, and partly evaporating with time, during the subsequent lamination processes. There is thus no need for a forced drying step. The adhesive polymer binder is selected from the group consisting of acrylic polymers and copolymers, starch, cellulose and polysaccharide derivatives, polymers and copolymers of vinyl acetate and vinyl alcohol. For best possible environmental and sustainability profile, adhesive binders originating from plants or non-fossil sources are preferred.

Suitable thermoplastics for the outermost and innermost liquid-tight layers are polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof. According to an embodiment, the outermost liquid-tight layer is an LDPE, while the innermost heat sealable, liquid-tight layer is a blend composition of m-LLDPE and LDPE for optimal lamination and heat sealing properties.

The same thermoplastic polyolefin-based materials, as listed regarding the outermost and innermost layers, and in particular polyethylenes, are also suitable in bonding layers interior of the laminated material, i.e. between a bulk or core layer, such as paper or paperboard, and a further barrier film or sheet. In an embodiment, the thermoplastic bonding layer may be a more simple or conventional polyethylene layer, such as a low density polyethylene (LDPE) layer.

The polyethylene-based polymers have been used and optimised for a very long time in the field of liquid carton packaging materials, but other liqiud-tight materials, such as thermoplastic polymer materials for the further provision of heat sealability and heat processability, such as other polyolefines, such as other polyethylenes or polypropylenes, or such as polyesters, are conceivable within the gist of the present invention. All kinds of bio-based such thermoplastic materials are thus conceivable within the gist of the present inventions, insofar as separate gas barrier properties still have to be provided via the materials described in connection to the use of the invention, of a high-density paper substrate, and to the barrier-coated high-density paper substrate.

In a further embodiment, the second innermost liquid tight, heat sealable polyolefin layer is a pre-manufactured film comprising the same or similar polyolefins, as described above, for improved robustness of the mechanical properties of the packaging material. Due to the manufacturing process in film blowing and film casting operations, and optional subsequent film orientation operation steps, the polymers of such films acquire different properties from what is possible from (co-) extrusion coated polyolefin layers. Such a pre-manufactured polymer film thus contributes to the mechanical robustness of a laminated packaging material and to mechanical strength and package integrity of formed and filled packaging containers from the laminate packaging material.

According to a further embodiment, suitable bonding or tie layers in the interior of the laminated material, such as for example between the bulk or core layer and the barrier-coated high-density paper substrate, or between the innermost liquid tight, heat sealable layer and the high-density paper substrate, may be so-called adhesive thermoplastic polymers, such as modified polyolefins, which are based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

A laminated packaging material made according to the above provides good integrity when transformed into filled packaging containers, by good adhesion between the adjacent layers within the laminated construction and by providing good quality of the barrier coating and the barrier pre-coating, each and in combination. Especially, for the packaging of liquids, and wet food, it is important that the inter-layer adhesion within the laminated packaging material, as well as the oxygen gas barrier properties, is maintained also under wet packaging conditions.

According to further embodiment, the packaging container formed from the laminated packaging material may be partly sealed, filled with liquid or semi-liquid food and subsequently sealed, by sealing of the packaging material to itself, optionally in combination with a plastic opening or top part of the package.

To conclude, robust and reliable packages for liquid food packaging for long term shelf-life and storage may be obtained by using the high-density paper substrate, further coated with barrier layers or laminated to further barrier material layers, in laminated packaging materials, as defined by the invention, thanks to the improved properties provided by the high-density paper substrate itself. The laminated packaging material structure works better for the forming into fold-formed packages, both from the improved interaction and adhesion between the high-density paper substrate and the gas barrier material coatings and from the improved contribution to gas barrier properties from the paper substrate itself.

Examples and description of preferred embodiments

In the following, preferred embodiments of the invention will be described with reference to the drawings, of which:

Fig. 1a-1b schematically show in cross-section embodiments of a high-density paper substrate for the use according to the invention,

Fig. 1c-1f show SEM images of surfaces and a cross-section of the high-density paper,

Fig. 2a-2c show schematic, cross-sectional views of barrier-coated high-density paper substrates according to the invention,

Fig. 3 show laminated packaging materials according to the invention, comprising embodiments of the barrier-coated high-density paper substrate of Figures 2a or 2c,

Fig. 4 show laminated packaging materials according to the invention, comprising embodiments of the barrier-coated high-density paper substrate of Figures 2b or 1a or 1b,

Fig. 5 shows yet an alternative laminated packaging material, comprising a barrier-coated high-density paper substrate as schematiclly shown in Figure 2c,

Fig. 6a shows schematically a method, for dispersion coating a base layer or barrier pre-coating composition onto a cellulose-based substrate,

Fig. 6b shows schematically a method, for melt (co-) extrusion coating layer(s) of a thermoplastic heat sealable and liquid-tigth polymer onto a web sustrate, to form innermost and outermost layers of a packaging laminate of the invention,

Fig. 7a is showing a diagrammatic view of a plant for physical vapour deposition (PVD) coating, by using a solid metal evaporation piece, onto a paper substrate or film,

Fig. 7b is showing a diagrammatic view of a plant for plasma enhanced chemical vapour deposition (PECVD) coating, by means of a magnetron plasma, onto a paper substrate or film,

Fig. 8a, 8b, 8c and 8d are showing typical examples of packaging containers produced from the laminated packaging material according to the invention,

Fig.9 is showing the principle of how such packaging containers are manufactured from the packaging laminate in a continuous, roll-fed, form, fill and seal process, and

Fig. 10 shows the greatly differing oxygen transmission results of two comparative laminated packaging materials, comprising gas-barrier coated high-density paper substrates as the barrier materials, in which the only differing feature is the selected high-density paper substrates.

Examples

Example 1

1A: Paper substrate production (2-ply paper)

Two pulps were provided: i) an ECF-bleached kraft pulp from softwood (i.e. a mixture of pine and spruce); and ii) an ECF-bleached kraft pulp from hardwood (i.e. birch).

The softwood pulp was refined using high-consistency (HC) refiners at a specific energy of 225 kWh/tonne (net energy input per tonne dry fibre). The HC-refined pulp was than mixed in a mixing chest with a broke pulp comprising a blend of bleached softwood and hardwood pulps (the majority of the broke was obtained from the same paper production). The share of broke in this softwood-based mixture was 30%. The softwood-based mixture was then refined by low-consistency (LC) refining at a specific energy of 75 kWh/tonne. This LC refining resulted in a Schopper-Riegler (°SR) according to ISO 5267-1:1999 of ~30 °SR.

The hardwood pulp was separately mixed with the same type of broke and then refined by low consistency refining using a specific energy of 85 kWh/tonne. The share of broke in hardwood-based mixture was 20%. The LC-refined hardwood-based mixture obtained a Schopper-Riegler (°SR) value of ~38 °SR.

To each of the two fiber streams, papermaking chemicals were added (4 kg/tonne of cationic starch, 0.2 kg/tonne of silica and 0.4 kg/tonne of AKD). The softwood-based mixture was pumped to a bottom ply head box of a two-ply fourdrinier machine, while the hardwood-based mixture was pumped to the top ply head box of the same fourdrinier machine. The dry mass flow through each of the head boxes was the same and adjusted to reach a total grammage of 60 $g/m^2$ prior coating (i.e. 30 $g/m^2$ per ply). The vertical slice lip was 34 mm for the bottom ply head box and 16 mm for the top ply head box, which reflect relatively low head box consistencies (about 0.12% for the bottom ply and about 0.25 % for the top ply). The wire speed was 600 m/min. In a paper machine specifically adapted for this product, the wire speed can be considerably higher.

The two plies formed on the fourdrinier machine were couched together at a dryness of ~10% and further dewatered using vacuum foils boxes to ~20% dryness before being subjected to wet pressing in a press section having two single felted press nips, wherein the first press had the felt on the top side and the second press had the felt on the bottom side.

After wet pressing, the web was dried in a conventional multi-cylinder dryer to form a paper substrate having a moisture content of ~5%. Prior winding up, the paper substrate was calendered in a soft nip at a line load of 20 kN/m. Properties of the paper substrate are presented in table 1 below.

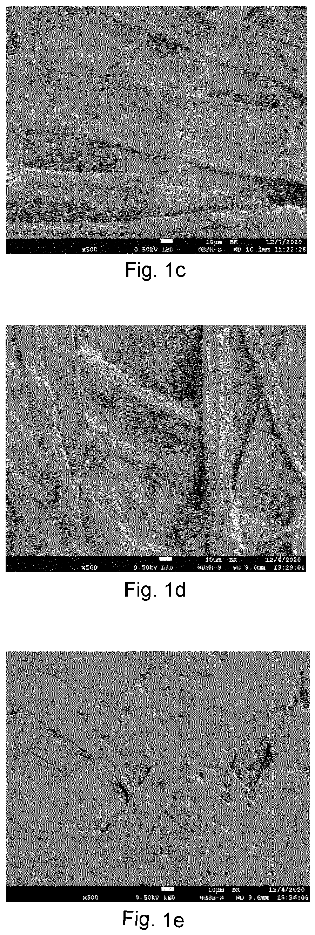

A SEM image of a surface portion of the formed paper is shown in figure 1c.

1B: Impregnation

The paper substrate from 1A was off-line impregnated with an aqueous polyvinyl alcohol (PVOH) composition from both sides in a conventional film press. The type of PVOH was Poval 10/98 from Kuraray and its concentration in the composition was 10% (in another trial, the concentration was instead 8%, which also provided good results). The composition further comprised glyoxal (Cartabond TSI) in an amount of 6 wt.% compared to the amount of PVOH. The glyoxal acted as a cross-linker. The viscosity of the composition was 74 mPa*s (measured at 60 °C). The applied amount of PVOH was 1 g/m$^2$ on the top side and 2 g/m$^2$ on the reverse/bottom side. The reason for using a higher amount of PVOH for the reverse/bottom side was that the pulp used for forming the bottom ply had a lower SR number (and hence that the reverse/bottom side had a less dense surface compared to the top side). The PVOH-impregnated paper substrate was dried using hot air to a moisture content of 8 %. Properties of the dried PVOH-impregnated paper substrate are presented in table 1 below.

Figure 1d shows a SEM image of a surface portion of the PVOH-impregnated paper substrate. As shown in figure 1d, the PVOH has not formed a film on the surface portion. Instead, it has penetrated into the fiber web.

In another trial, the applied amount of PVOH was 1.5 g/m$^2$ on each side instead of 1 g/m$^2$ on the top side and 2 g/m$^2$ on the reverse/bottom side.

1C: Supercalendering

The impregnated paper substrate from 1B was re-moisturized to 15%. The re-moisturized paper was fed to an off-line multi-nip calender also referred to as a supercalender (the number of nips was 12). Supercalendering was carried using a surface temperature of 140 °C on the thermo rolls, which could be obtained by means of outside induction heaters, to obtain a high-density paper. The line load in each nip was 450 kN/m. The total supercalendering nip impulse was ~800 kPa·s [#nips × line load / web speed]. The heating from the thermo rolls dried the high-density paper. The moisture content at wind-up was 8%. Properties of the high-density paper are presented in Table 1 below.

A SEM image of a surface portion of the high-density paper is shown in figure 1e. Further, figure 1f shows a SEM image of a cross section 10f of the high-density paper. The dark grey areas 15 are PVOH and light grey areas 16 are fibers. There are also unfilled pores 17. Consequently, the high-density paper is not saturated with PVOH. However, figure 1f shows that most of the PVOH is within the fiber web. Only minor portion of the PVOH is found on the surface.

1 D: 1$^{st}$ reference supercalendering

As a reference, a paper substrate produced according to 1A above, but with softwood kraft pulp and broke as the only pulps in both plies, was supercalendered as in 1C above (but not impregnated). Resulting properties are presented in Table 1 below.

1E: 2$^{nd}$ reference supercalendering

As a reference, a machine glazed (MG) paper formed from a mixture of hardwood pulp and softwood (dry weight ratio 40:60) pulp was supercalendered as in 1C above, but the total nip impulse of the supercalendering step was about 10% lower. Resulting properties are presented in Table 1 below.

2A: Paper Substrate (single-ply paper)

A single-ply paper made for a different purpose, but by a similar process, and having similar properties was provided. The single-ply paper was made from a mixture of pulps from Kraft softwood pulp and Kraft hardwood pulp and a small amount of CTMP pulp, to a mixture ratio of 45:45:10. The single-ply paper was impregnated with polyvinyl alcohol from the top side and subsequently calendered to a density of about 1050 kg/m$^3$ with a resulting grammage of 45 g/m$^2$. The top-side surface had a surface roughness of about 25 ml/min Bendtsen.

2B: Paper Substrate (single-ply paper)

A single-ply paper of a similar composition to paper substrate 2A was provided. The single-ply paper was impregnated with of polyvinyl alcohol from the top side and calendered to a density of about 1100 kg/m$^3$ with a resulting grammage of 57 g/m$^2$. The top-side surface had a smoothness of lower than 15 ml/min Bendtsen.

Resulting properties

For Table 1, the following applies:
Grammage was measured according to ISO 536:2012 and has the unit g/m². Thickness was measured according to ISO 534:2011. Density was measured according to ISO 534:2011 and has the unit kg/m³. Roughness means Bendtsen roughness, was measured according to ISO 8791-2:2013 and has the unit ml/min. Tensile strength index was measured in the MD and the CD according to ISO 1924-3:2005 and has the unit Nm/g. Tear strength index was measured in the MD and the CD according to ISO 1974:2012 and has the unit mNm²/g. Tensile Stiffness Index was measured according to ISO1924-3:2005. °SR was measured according to ISO 5267-1:1999 after repulping according to ISO 5263-1:2004. Canadian Standard Freeness, "CSF", was measured by the unit ml according to ISO 5267-2:2001, after repulping according to a Valmet repulping method, using a Valmet pulper of the type HD400. The Valmet repulping method is described in further detail below. "Somerville residue", which is quantified as weight-%, measures residues retained in a Somerville shive and flake content analyzer having a slot plate width of 0.15 mm. The Somerville method is described in further detail below. The SV residue content was calculated as dry weight-% of originally introduced dry material (into the re-pulper). Dry has the meaning of having 0 % moisture content in the material tested, which is accordingly oven dried before weighing. Fines content was measured with a L&W Fibretester (ABB, Lorentzen & Wettre, Sweden) ISO 16065-2 after repulping according to ISO 5263-1:2004. Fines are defined as all objects with a particle length less than 0.2 mm, as seen by an image-based fibre analyser. Oxygen transmission rate, (OTR) was measured according to ASTM F1927-14 after lamination with 20 g/m² LDPE on the top side of the paper and has the unit cm³/m²/24h, 0.2 atm (21%) oxygen. Super Perga 1 and 2 are commercial greaseproof papers. Super Perga 1 was used as a paper substrate in WO 2017/089508.

Table 1

| | Paper substrate (1A) | PVOH-impreg. paper substrate (1B) | High-density paper (1C) | Ref. SC paper (1D) | MG paper (1E) | Paper substrate (2A) | Paper substrate (2B) | Ref. Super Perga 1 | Ref. Super Perga 2 |
|---|---|---|---|---|---|---|---|---|---|
| Grammage | 60 | 63 | 63 | 60 | 50 | 45 | 57 | 32§ | 45 |
| Density | 800 | 770 | 1100 | 1071 | 1114 | 1000 | 1100 | 865§ | 832/ 905/ 938§ |
| Roughness | 150 | 330 | 50 | 33 | 23 | 25 | 14 | 290 | 440 |
| Tensile strength index (MD/CD) | 115/57 | 122/64 | 133/70 | | | 112/44 | | 94/41 | 93/40 |
| Tear resistance index (MD/CD) | | | 4.6/5.5 | | | 4.4/5.4 | | 3.9/4.5 | 4.0/4.8 |
| °SR | | | 40.5 | | | | 28.5 | | 74 |
| CSF Paper (20 min) | | | 277 | | | 267 | 255 | 53* (38 g/m²) | |
| Somerville residue (%) Paper (20 min) | | | 0.1 | | | 0.6 | 2.6 | 86.2* (43.4* at 60 min) | |
| Fines content (%) | | | 26.7¤ | | | | 34.0 | | 46.0 |
| OTR 23°C, 50%RH, 0,2 atm O2 (paper coated with 20 g/m2 LDPE on top side) | N/A | 19.4 | 6.1 4.5¤ | ~200 | >2500 | 9.2 | 9.3 | 42* | 232 (194**) |

(continued)

| | Paper substrate (1A) | PVOH-impreg. paper substrate (1B) | High-density paper (1C) | Ref. SC paper (1D) | MG paper (1E) | Paper substrate (2A) | Paper substrate (2B) | Ref. Super Perga 1 | Ref. Super Perga 2 |
|---|---|---|---|---|---|---|---|---|---|
| OTR 23°C, 80%RH, 0.2 atm O2 | N/A | 33.3 | 13.9 15.3¤ | | | 12.6 | | | |

§ According to the supplier's data sheet
¤ Tested on the high-density paper that had been impregnated with 1.5 g/m$^2$ PVOH on each side.
* The grammage was 38 g/m2 instead of 32 g/m2
** After supercalendering according to example 1C (no PVOH-impregnation)

As shown in table 1 above, neither supercalendering (high density) nor PVOH impregnation alone results in really low OTR values. As an example, supercalendering had very little effect on the OTR value of the non-impregnated paper Super Perga 2. In contrast, supercalendering of the PVOH-impregnated paper substrate from Example 1B reduced the OTR value (50% RH) by -70% to well below 10 cm$^3$/m2/24h.

The Valmet repulping method was carried out as described in the following. Repulping of the papers was carried out by using a Valmet pulper of the type HD400, that is used for stock preparation, i.e. fiber disintegration. Agitation was done with an impeller with three radial and serrated blades with the dimensions 30 by 40 mm rotating at a speed of 3000 rpm. The paper was cut in 90 by 90 mm pieces. 0.5 kg of air-dried paper pieces was mixed with 10 liters of water, i.e. to a consistency of 5%, and repulped at 2.5 minutes at a temperature of 57 deg C. Then 5 liters of water was added, providing a consistency of 3.3 %, and further repulping at another 17.5 minutes at a temperature of 57 deg C was performed. Total repulping time was thus 20 minutes.

For quantification of Somerville residues, as retained in a Somerville shive and flake content analyzer with slot plate width 0.15 mm, the pulp obtained from the above Valmet repulping method was diluted to less than 1 % consistency and then analyzed in the Somerville analyzer to obtain the proportion of flake residues as weight-% calculated on oven dry material (i.e. moisture content 0 %), initially introduced into the repulping operation.

Determination of Canadian Standard Freeness of pulp: The pulp obtained from the above Valmet repulping method was diluted to -0,3% and Canadian Standard Freeness tested according to ISO 5267-2:2001.

The impregnated but uncoated papers exhibit lower OTR when further coated with a layer of LDPE, than does non-impregnated papers used in prior art. Since the impregnation polymer used is moisture sensitive, these properties deteriorate with increasing moisture content (80% RH).

Example 2

A laminated packaging material was provided, comprising an impregnated high-density paper substrate 2B as of Example 1, which had further been coated twice with 1 g/m$^2$ of PVOH onto the top side of the paper substrate and dried after each coating operation. The oxygen transmission of the laminated material was measured by a fluorescent method using an oxygen probe PSt9 from PreSens GmbH, Germany. According to this method, a flat sample to be analyzed is placed on a cell, which is flushed with dry nitrogen, in which the probe is also located. The area of the circular cell section is 68 cm$^2$ (0.0068 m$^2$). The surface of the sample that is not directed towards the cell is facing ambient air, i.e. 0,21 % oxygen, at 23 °C and 50 % RH. By using the oxygen concentration reading from the probe an oxygen transmission rate is calculated according to ASTM F3136-15. The unit is provided as ml/specimen.

A comparison test was made with a similar paper, having a grammage of 39 g/m$^2$ and a density of 974 kg/m$^3$, comprising in a majority sulphate (kraft) pulp fibres from softwood, refined to provide a low porosity, but not as far refined as a conventional greaseproof paper. The comparison paper was supercalendered and had a top side surface smoothness of about 33 ml/min Bendtsen.

The laminated packaging materials had the layer structure:

/LDPE 12 g/m$^2$/ 80 mN liquid paperboard/LDPE 20 g/m$^2$/paper

substrate with 2x PVOH á 1 g/m$^2$/Adh EAA copolymer 6 g/m$^2$/blend LDPE+m-

LLDPE 19 g/m$^2$ /

By this alternative oxygen transmission measurement method, a planar material may be investigated regarding its oxygen barrier properties before and after having folded and again un-folded the material. The folding angle was 165 degrees and the barrier layer was directed to be on the outside of the fold. Measured values are the average of 5 samples measured.

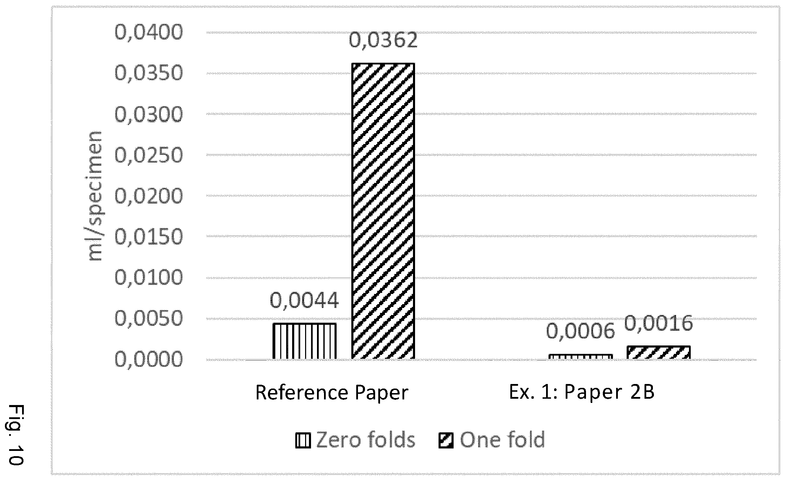

The results are shown in the graph of Figure 10, proving that the folding of a laminated packaging material, comprising a PVOH-coated reference paper substrate, which is not impregnated, but otherwise similar in properties regarding density and surface roughness and which exhibits some inherent oxygen barrier, results in loss of its oxygen barrier properties, whereas the oxygen transmission value of the laminated packaging material comprising the impregnated high-density paper remains substantially unchanged after one fold operation. By normal planar sample testing according to ASTM F1927-14, see Example 3, of the reference paper, when coated with 20 g/m2 LDPE on its top side, its oxygen transmission was about 34 cc/m2 /day/0.2 atm, 23 °C, 50% RH, while the sample paper, i.e. paper 2B from Example 1, was measured to have a corresponding OTR value of 9.3. Since there is only a low level of oxygen barrier properties in the reference paper, the major loss is derived mainly to the coatings of PVOH polymer. In the case of Paper 2B, on the other hand, any damages in the PVOH coating may be compensated for by the impregnated paper substrate, most likely by a combined effect of comprising some further PVOH having inherent gas barrier properties in the cellulose material, and the fact that the impregnating polymer completely fills the voids or pores of the cellulose material, such that oxygen molecules cannot just diffuse through the paper material in between the fibres, but meet some resistance, i.e. "barrier", by the impregnating and pore-filling material.

Example 3

Impregnated high-density papers according to 1C and 2A, as of Example 1, were further dispersion coated twice with intermediate and subsequent drying operations, to provide 3 g/m2 of PVOH and metalized to an optical density of about 2. A laminated packaging material was then produced according to the layer structure

$$\text{/LDPE 12 g/m}^2\text{/ paperboard 80 mN /LDPE 20 g/m}^2\text{/ paper substrate}$$

$$\text{+PVOH+met/ Adhesive EAA copolymer 6 g/m}^2 + 29 \text{ g/m}^2 \text{ blend LDPE +}$$

$$\text{mLLDPE /}$$

Packages were produced in a Tetra Pak® E3/CompactFlex filling machine. This type of filling machine has the capacity to fill portion packages at a speed of 9000 packages/hour and a flexibility that allows for quick change between different package formats. Packages were in the format of Tetra Brik® with a volume of 200 ml.

No major problems regarding packaging integrity (i.e. package tightness vs the surrounding environment) and sealing performance were identified during the trials, which therefore were considered successful.

Oxygen transmission rate of flat packaging material was measured using a coulometric detector according to the standard ASTM F1927-14. The moisture level is either 50% or 80% relative humidity. The unit is $cm^3/m^2/24h$, with the option of using 0.2 atm or 1 atm of oxygen pressure. To be able to compare OTR values measured at 1 atm with OTR values measured at 0.2 atm, the former values can be multiplied with 0.2.

The Oxygen transmission rate of packages (filled, emptied and dried) was measured according to ASTM F1307-14, at 0.2 atm (surrounding air containing 21 % oxygen). The unit is $cm^3/package/24h$.

The package is mounted on a special holder; inside the package nitrogen is purged; the outside of the package is exposed to the environment surrounding the instrument. When oxygen permeates through the package into the nitrogen carrier gas, it is transported to the coulometric sensor. The sensor reads how much oxygen is leaks into the nitrogen gas inside the package.

The Comparative Examples were made with greaseproof papers from Nordic Paper, identified as "Super Perga® WS Parchment" having grammages of 32 (Example 3) and 38 (Example 4) g/m², respectively.

Table 2

| Samples paper substrate | Comparative Example 3C1: NP Superperga WS 32 gsm Parchment FL109 GPP * | Comparativ e Example 3C2: Superperga WS 32 gsm Parchment FL109 GPP ** | Example 3A: HD paper1C of Example 1 *** | Example 3B: HD paper 2A of Example 1 *** |
|---|---|---|---|---|
| Principal laminate structure: /LDPE/ paperboard /LDPE/ paper substrate +PVOH+met/ inside PE polymers/ | 260 mN paperboard; 1 g/m$^2$ PVOH; Met to OD 2.5; | 80 mN paperboard 1.5 g/m$^2$ PVOH; Met to OD ~2.3; | 80 mN paperboard 3 g/m$^2$ PVOH; Met to OD ~2; | 80 mN paperboard 3 g/m$^2$ PVOH; Met to OD ~2; |
| Package format | Tetra Brik® Aseptic1000 B | Tetra Brik® Aseptic200S | Tetra Brik® Aseptic200 S | Tetra Brik® Aseptic200 S |
| Package volume | 1000 ml | 200 ml | 200 ml | 200 ml |
| Laminate area per package | 0.077 | 0.030 | 0.030 | 0.030 |
| | | | | |
| Flat laminate OTR 1 atm, 23 °C, 50% RH | 0.4 measured | 1.3 measured | | |
| Flat laminate OTR 1 atm, 23 °C, 80% RH | 0.4 measured | 1.3 measured | | |
| Flat laminate OTR 0.2 atm, 23 °C, 50% RH | 0.080 calculated | 0.26 calculated | 0.165 measured | 0.240 measured |
| Flat laminate OTR 0.2 atm, 23 °C, 80% RH | 0.080 calculated | 0.26 calculated | 0.245 measured | 0.190 measured |
| | | | | |
| Calculation of loss: | | | | |
| Calculated, theoretical OTR per package, 0.2 atm, 23 °C, 50% RH | 0.0062 | 0.0078 | 0.0050 | 0.0072 |
| Calculated, theoretical OTR per package, 0.2 atm, 23 °C, 80% RH | 0.0062 | 0.0078 | 0.0074 | 0.0057 |
| | | | | |
| Measured OTR per package 0.2 atm, 23 °C, 50% RH | 0.06 | 0.075 | 0.029 | 0.030 |
| Measured OTR per package 0.2 atm, 23 °C, 80% RH | | | 0.028 | 0.0315 |
| | | | | |
| Loss factor measured/ theoretical , 23 °C, 50% RH | 9.7 | 9.6 | 5.8 | 4.2 |
| Loss factor measured/ theoretical , 23 °C, 80% RH | | | 3.8 | 5.5 |

* /LDPE 12 g/m$^2$/ paperboard 260 mN /LOPE 20 g/m$^2$/ paper substrate +PVOH+met/ LDPE 20 g/m$^2$ /LDPE+mLLDPE 20 g/m$^2$ /

** /LDPE 12 g/m$^2$/ paperboard 80 mN /LDPE 20 g/m$^2$/ paper substrate + PVOH+met/ LDPE 40 g/m$^2$ /

*** /LDPE 12 g/m2/ paperboard 80 mN /LDPE 20 g/m$^2$/ HD paper substrate +PVOH+met/ Adhesive EAA copolymer 6 g/m$^2$ + 29 g/m$^2$ blend LDPE + mLLDPE /

Although, there is a difference between the comparative examples and the examples according to the invention in the amount of polyethylene of the layers facing the inside of the package, i.e. 40 g/m$^2$ and 35 g/m$^2$, respectively, this has no practical influence for the comparison of oxygen transmission rate since polyethylene is a poor oxygen barrier in relation to the HD paper and the applied coating. Typical oxygen transmission rate for LDPE of 40 $\mu$m thickness is 600-900 cm$^3$/m$^2$/24h/0.2 atm at 23 °C.

Example 4

Table 3

| Repulpability of laminated packaging materials | Comp. Ex. 4C1 Aluminium foil reference material ¤ | Comp. Ex. 4C2 NP Superperga WS 38 gsm Parchment FL109 GPP ¤¤ | Example 4A: HD paper 1C of Example 1 in laminate of Example 3A ¤¤ | Example 4B: HD paper 2B of Example 1 in similar laminate to Example 3B ¤¤ |
|---|---|---|---|---|
| Laminate | 80 mN paperboard; TBA 200 ml 6.3 $\mu$m Al-foil | 80 mN paperboard; TBA 200 ml 1 g/m$^2$ PVOH; Met to OD 2.5; | 80 mN paperboard TBA 200 ml 3 g/m$^2$ PVOH; Met to OD $\sim$2; | 80 mN paperboard TBA 200 ml 3 g/m$^2$ PVOH; Met to OD $\sim$2; |
| Coarse reject (wt-%) As repulped by Valmet pulper, 20 min | 29 | - | 26 (18 after 50 minutes) | 18 |
| Coarse reject (wt-%) As re-pulped by contracted supplier: | 39.8 | 40.2 | - | - |
| ¤ / LDPE 12 g/m2/ paperboard 80 mN /LDPE 20 g/m2/ Al-foil 6.3 $\mu$m / Adhesive EAA copolymer 6 g/m2 + 19 g/m2 blend LDPE + mLLDPE / ¤¤/LDPE 12 g/m2/ paperboard 80 mN /LDPE 20 g/m2/ paper substrate +PVOH+met/ Adhesive EAA copolymer 6 g/m2 + 19 g/m2 blend LDPE + mLLDPE / | | | | |

A coarse reject, i.e. the non-fibrous recyclable part of the laminated materials, being polymers, aluminium foil and some non-detachable fibres, was determined after re-pulping by a Valmet pulper. The re-pulping was carried out in the same way as regarding the determination of CSF and Somerville residue values from re-pulping of the sole paper substrates in Example 1 above, except that the laminated packaging material to be repulped and analyzed was first cut into pieces of 30 by 90 mm. The coarse reject was screened away by using a plate with holes of diameter 10 mm, and then dried to 0 % moisture content and calculated as weight percent of dry (0 % moisture) material introduced into the pulper.

The coarse reject as determined by a contracted global industrial supplier of equipment for fiber processing and recycling, was made in a similar way, however mixing 20 g of laminated material into 2 l of water, and by disintegrating to a consistency of about 1 %, instead of 3.3 %, for 18 minutes. The water temperature was also in this re-pulping test kept at 57 °C.

It is confirmed by the above that the previously explored paper substrates for oxygen barrier coatings, capable of generating comparatively high oxygen barrier levels in laminated packaging materials as well as in filled and sealed packages therefrom, do not, however, lead to a reduced amount of rejected material in existing recycling processes, such as in recycling of used beverage cartons. Although, aluminium foil as a raw material may be avoided, the amount of material to be wasted or incinerated (coarse reject) would be equally high from recycling of the material, as tested by the above recycling firm, as seen in Comparative Example 4C2 vs 4C1.

A comparative determination of prior art paper-based barrier laminates has not yet been performed by the Valmet pulper and the re-pulping method described above, but it is expected, based on the results of Comparative Examples 4C2 and 4C1, that also the Valmet method would generate a similarly high proportion of coarse reject to the tested reference aluminium foil material. The laminated materials according to the invention, on the other hand, exhibit a significantly lowered proportion of reject, such as lower than 20 wt-% coarse reject. Laminated materials comprising paper substrate 1C of Example 1, as presented in Example 3A and 4A, seems to need a little longer re-pulping time of the laminated material, in comparison to laminated materials according to Example 4B, but will anyway be equally disintegrated after a longer repulping time such as in this case 50 minutes, with the same resulting low proportion of coarse reject. The laminated material tested for repulping in Example 4B comprises a paper substrate having a similar composition as the one of Example 3B, but a higher grammage. It is thus expected that the laminated packaging material Example 3B of the invention, would generate a similarly low amount of coarse reject.

Conclusions

Filled 200 ml packages made from standard laminates of the coated papers of the invention show generally a very low level of oxygen transmission of 0.03 cc/m2/ day/ 0.2 atm, at 23 °C, 50%RH. Furthermore, the values do not seem to significantly deteriorate at an environment of 23 °C, 80 % RH. The OTR testing was carried out 2-3 weeks after production of the filled and sealed packages. The oxygen transmission in a 200 ml package of 0.03 provides an about 2-3 times better shelf life for oxygen sensitive products, than would an oxygen transmission of about 0.075, as of the Comparative Example 3C2.

The OTR of a laminated material of the invention is at least as good as similar paper-based barrier laminates of the prior art. Above all, it does not exhibit the same level of loss of oxygen barrier properties from the transformation of the laminated material into filled, formed and heat-sealed packaging containers. The difference is not attributable to the fact that the amount of coated PVOH is higher, compared to the comparative examples, as shown above. That difference may increase the oxygen barrier properties of a planar laminated (unfolded) material, but it cannot explain that improved oxygen barrier in filled and sealed packages are also obtained beyond minor improvement levels.

Generally, the packaging integrity has proved to be good with the paper-based barriers of the invention. It has furthermore been seen that the package integrity improves as the paper substrate grammage is lower, such as at from 30 to 65 g/m$^2$, such as at from 35 to 60 g/m$^2$, such as at from 35 to 50 g/m$^2$. The thickness of the paper substrate should thus preferably be from 35 to 60 $\mu$m, such as from 35 to 50 $\mu$m, such as from 35 to 45 $\mu$m. If the coated paper substrate is thicker, more polymer was needed in order to make tight and durable seals, when transforming the laminated material into filled and sealed, cuboid-shaped packages. A thinner paper substrate thus enabled a lower proportion of thermoplastic polymers needed in the packaging laminate, which is of high importance as packaging materials need to be adapted to recycling streams of very high fibre content in the future, such that the materials may be recycled to be used again, rather than being turned into waste.

Furthermore, the impregnated high-density paper substrates of the present invention provided for laminated materials having improved recycling and re-pulpability properties, both as compared to aluminium-foil based packaging materials and to laminated packaging materials based on nonaluminium-foil gas-barriers. This improvement further supports the development of more sustainable packaging materials, altogether. It enables a higher fibre-based content also in laminated packaging materials for packaging of products that are very sensitive to oxygen, such as for example fruit juices and other fruit- or vegetable-based food having a natural content of vitamin C to preserve.

Further, relating to the attached figures:

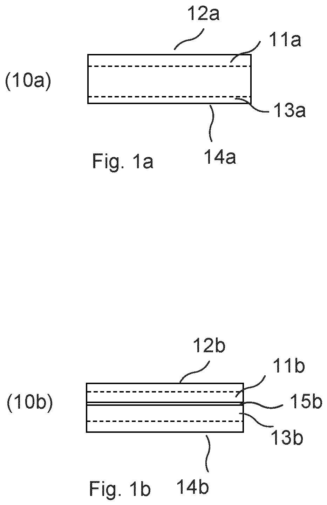

In Fig. 1a, there is shown, in cross-section, an embodiment of a high-density paper substrate 10a, of the invention. The paper substrate 10a has a single-layer configuration, and is impregnated 11a with a polyvinylalcohol having a high degree of hydrolysis, at the top-side surface 12a. The amount dry weight of impregnated PVOH is about 1-1,5 g/m$^2$. The paper substrate may impregnated 13a also at the back-side surface 14a, with about 1-2 g/m$^2$ of PVOH or oxidised starch.

Fig. 1b shows in cross-section an embodiment of a high-density paper substrate 10b, of the invention. The paper substrate 10b has a two-ply configuration, wherein the top ply 11b at the top-side of the paper substrate is impregnated with a polyvinylalcohol having a high degree of hydrolysis, at its top-side surface 12b. The amount dry weight of impregnated PVOH is about 1 g/m$^2$. The bottom ply 13b of the paper substrate may also impregnated at the back-side surface 14b, with about 2 g/m$^2$ of PVOH. In the manufacturing of the two-ply paper, there may optionally be applied a further, interjacent coating or addition 15b of starch or PVOH before superimposing the top ply onto the bottom ply.

Fig. 1c shows a SEM image of a surface portion of the paper formed, wet-pressed and dried, but not impregnated and calendered to attain its final properties and high density.

Fig. 1d shows a SEM image of a surface portion of the PVOH-impregnated paper substrate. As shown in figure 1d, the PVOH has not formed a film on the surface portion. Instead, it has penetrated into the fiber web.

Fig. 1e shows a SEM image of a surface portion of the high-density paper, as obtained by the impregnated paper of Fig. 1d when also supercalendered.

Fig. 1f shows a SEM image of a cross section 10f of the high-density paper. The dark grey areas 15 are PVOH and light grey areas 16 are fibers. There are also unfilled pores 17. Consequently, the high-density paper is not saturated with PVOH. However, figure 1f shows that most of the PVOH is present within the fiber web. Only a minor portion of the PVOH is found on the surface of the paper.

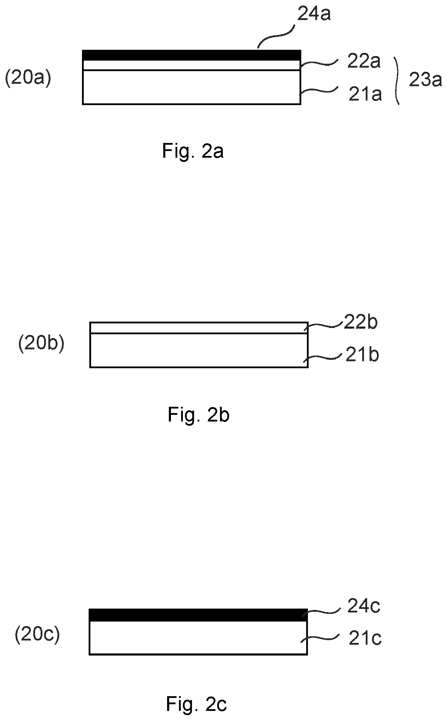

In Fig. 2a, there is shown, in cross-section, an embodiment of a gas-barrier coated high-density paper substrate 20a, of the invention. The high-density paper substrate 21a, taken from of Fig. 1a or Fig. 1b, is first coated with an aqueous gas barrier composition comprising PVOH in two coating steps with intermediate and subsequent drying steps, such that a layer 22a of two times 1,5 g/m$^2$, i.e. 3 g/m$^2$, is applied, in total, dry weight.

The thus PVOH-coated, high-density paper substrate 23a (i.e. consisting of 21a and 22a), further has a vapour deposition coating of an aluminium metallisation 24a, on top of the PVOH coating 22a. This coating configuration in combination with the high-density paper substrate provides for a preferred non-foil laminated packaging material, and for high and durable gas barrier properties in a fold-formed, filled and heat-sealed packaging container made from such a non-foil packaging material.

Fig. 2b shows a gas-barrier coated high-density paper substrate 20b, also of the invention, corresponding to the PVOH-coated, high-density paper substrate 23a in Fig. 2a. A high-density paper substrate 21b, taken from of Fig. 1a or Fig. 1b, is thus coated with an aqueous gas barrier composition comprising PVOH in two coating steps with intermediate and subsequent drying steps, such that a layer 22b of two times 1,5 g/m2, i.e. 3 g/m2, is applied, in total, dry weight. This is another variant of a paper-based gas barrier material, which may be combined with a further, complementary barrier material in a laminated packaging material, such as with a vapour deposited barrier coating on a polymer film substrate. Such a non-foil laminated packaging material, will likewise provide for high and durable gas barrier properties in a fold-formed, filled and heat-sealed

Fig. 2c shows an alternative gas-barrier coated high-density paper substrate 20c. The high-density paper substrate 21c, taken from of Fig. 1a or Fig. 1b, simply has a vapour deposition coating of an aluminium metallisation 24c, applied onto the top-side surface of the high-density paper substrate 21c. In cases where the internal gas barrier properties of the impregnated high-density paper substrate are designed to be as high as possible, it may be sufficient to directly coat the paper substrate by vapour deposition coating to further boost the total gas barrier performance of the high-density paper substrate. A non-foil laminated packaging material comprising the coated high-density paper substrate 20c, will also provide for high and durable gas barrier properties in a fold-formed, filled and heat-sealed packaging container made therefrom, as the sole barrier material, or in combination with further complementary barrier materials.

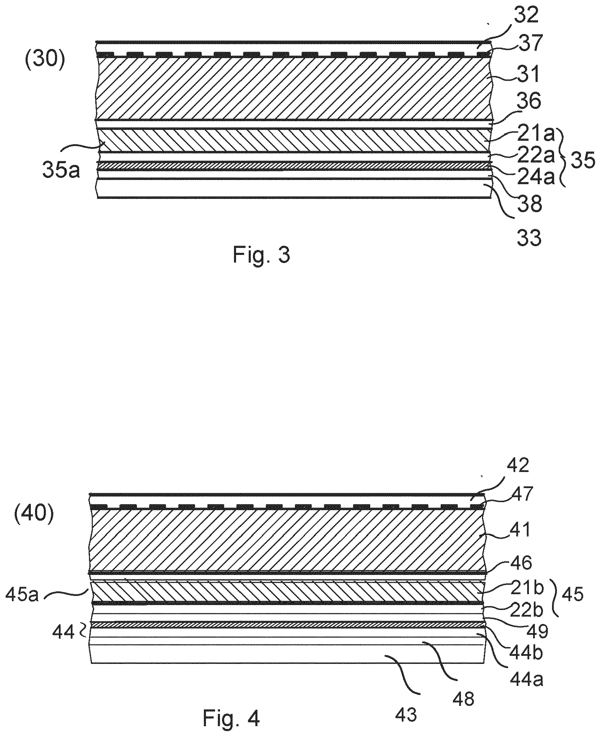

In Fig. 3, a laminated packaging material 30 for liquid carton packaging is shown, in which the laminated material comprises a paperboard bulk layer 31 of paperboard, having a bending force of 80 mN and a grammage weight of about 200 g/m$^2$, and further comprising an outer liquid tight and heat sealable layer 32 of polyolefin applied on the outside of the bulk layer 31, which side is to be directed towards the outside of a packaging container produced from the packaging laminate. The layer 32 is transparent to show the printed décor pattern 37, applied onto the bulk layer of paper or paperboard, to the outside, thus informing about the contents of the package, the packaging brand and other information targeting consumers in retail facilities and food shops. The polyolefin of the outer layer 32 is a conventional low density polyethylene (LDPE) of a heat sealable quality, but could also include further similar polymers, including LLDPEs. It is applied at an amount of about 12 g/m$^2$. An innermost liquid tight and heat sealable layer 33 is arranged on the opposite side of the bulk layer 31, which is to be directed towards the inside of a packaging container produced from the packaging laminate, i.e. the layer 33 will be in direct contact with the packaged product. The thus innermost heat sealable layer 33, which is to form strong transversal heat seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE). It is applied at an amount of about 29 g/m$^2$.

The bulk layer 31 is laminated to the uncoated side of the barrier-coated paper substrate 20a from Fig. 2a, i.e. 35, by an intermediate bonding layer 36 of a low density polyethylene (LDPE). The intermediate bonding layer 36 is formed by means of melt extruding it as a thin polymer melt curtain between the two paper webs and thus laminating the bulk layer and the barrier-coated paper substrate to each other, as all three layers pass through a cooled press roller nip. The thickness of the intermediate bonding layer 36 is from 12 to 18 $\mu$m, such as from 12-15 $\mu$m.

The innermost heat sealable layer 33 may consist of one layer or alternatively of two or more part-layers of the same or different kinds of LDPE or LLDPE or blends thereof, and is well adhered to the metallised barrier deposition coating surface 24a of the barrier-coated high-density paper substrate 33, i.e. 20a, by an intermediate coextruded tie layer 38, e.g. of ethylene acrylic acid copolymer (EAA) which thus binds the innermost heat sealable layer(s) 33 to the barrier coated paper substrate 20a, by applying the tie layer 38 and the innermost layers 33 together in a single melt coextrusion coating step.

Alternatively, the bulk layer 31 may be laminated to the barrier-coated paper substrate described in Fig. 2a, by means of wet lamination with an intermediate bonding layer 36b of a thin layer of adhesive polymer, obtained by applying an aqueous dispersion of a PVOH or polyvinyl acetate adhesive onto one of the surfaces to be adhered to each other and subsequently pressing together in a roller nip. Thanks to the absorbing bulk layer of a comparatively thick cellulose structure, this lamination step may be performed in an efficient cold or ambient lamination step at industrial speed without energy-consuming drying operations, which normally are needed to accelerate the evaporation of water. The dry amount applied of the intermediate bonding layer 36b is of a few g/m$^2$ only, such as from 2 to 6 g/m$^2$, such that there is no need for drying and evaporation.

Thus, the amount of thermoplastic polymer can be significantly reduced in this lamination layer, in comparison to the conventional melt extrusion laminated bonding layer of polyethylene 36.

In an alternative embodiment, not shown, the gas-barrier coated high-density paper substrate 20c, taken from Figure 2c, may be laminated into the same laminated structure, instead of the coated high-density paper 35, i.e. 20a.

In Fig. 4, a different laminated packaging material 40 of the invention, for liquid carton packaging, is shown, in which the laminated material comprises a paperboard core layer 41, having a bending force of 80 mN and a grammage weight of about 200 g/m$^2$, and further comprising an outer liquid tight and heat sealable layer 42 of polyolefin applied on the outside of the bulk layer 41, which side is to be directed towards the outside of a packaging container produced from the packaging laminate. The polyolefin of the outer layer 42 is a conventional low density polyethylene (LDPE) of a heat sealable quality and has been applied at an amount of 12 g/m$^2$, but may include further similar polymers, including LLDPEs.

An innermost liquid tight and heat sealable layer 43 is arranged on the opposite side of the bulk layer 41, which is to be directed towards the inside of a packaging container produced from the packaging laminate, i.e. the layer 43 will be in direct contact with the packaged product. The thus innermost heat sealable layer 43, which is to form strong heat seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE).

The barrier-coated high-density paper substrate 20b of Fig. 2b, i.e. 45, is further laminated to a complementary barrier film 44, comprising a polymer film substrate 44a, being a film of biaxially oriented polypropylene, BOPP, coated with a vapour deposited barrier coating 44b, being an aluminium metallised coating, by melt extrusion lamination with an intermediate bonding layer 49 of a low density polyethylene (LDPE).

The bulk layer 41 is then laminated to the un-coated, not laminated, side of the barrier-coated high-density paper substrate 20b described in Fig. 2b, by means of wet lamination with an intermediate bonding layer 46 of a thin layer of adhesive polymer, obtained by applying an aqueous dispersion of a PVOH or polyvinyl acetate adhesive onto one of the surfaces to be adhered

to each other and subsequently pressing together in a roller nip. This lamination step may thus also be performed in an efficient cold or ambient lamination step as described in Fig. 3, by an intermediate bonding layer 46 of a few g/m$^2$ only, such that there is no need for drying and evaporation.

Thus, the amount of thermoplastic polymer can still be reduced also in this laminated packaging material, in the lamination layer, in comparison to a conventional melt extrusion laminated bonding layer of polyethylene, as described in Fig. 3.

The innermost layer 43 is applied onto the barrier-coated film 44, optionally together with an adjacent adhesive polymer layer in a co-extrusion coating operation.

According to a further embodiment, not shown, the un-coated high-density paper substrate 10a or 10b of Fig. 1a or 1b, may be laminated into the same laminated material structure described above, instead of the coated high-density paper substrate 45, i.e. 20b.

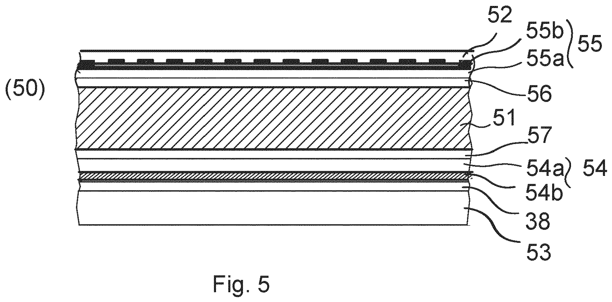

Fig. 5 shows a laminated packaging material 50 for liquid carton packaging, in which the laminated material comprises a paperboard bulk layer 51 of paperboard, having a bending force of 80 mN and a grammage weight of about 200 g/m2, and further comprising an outer liquid tight and heat sealable layer 52 of polyolefin applied on the outside to be directed towards the outside of a packaging container produced from the packaging laminate. The layer 52 is transparent to show a printed décor pattern 57 to the outside, thus informing about the contents of the package, the packaging brand and other information targeting consumers in retail facilities and food shops. The polyolefin of the outer layer 52 is a conventional low density polyethylene (LDPE) of a heat sealable quality, but could also include further similar polymers, including LLDPEs. It is applied at an amount of about 12 g/m2.

An innermost liquid tight and heat sealable layer 53 is arranged on the opposite side of the bulk layer 51, which is to be directed towards the inside of a packaging container produced from the packaging laminate, i.e. the layer 53 will be in direct contact with the packaged product. The thus innermost heat sealable layer 53, which is to form strong transversal heat seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE). It is applied at an amount of about 29 g/m2.

The bulk layer 51 is laminated to a barrier-coated high-density paper substrate as exemplified in Fig. 2c, by the coated paper substrate 20c, wherein the vapour deposited barrier coating is an aluminium metallised coating or a transparent aluminium oxide, AlOx, coating. The coated paper substrate is laminated to the outer side of the bulk layer 51, between the bulk layer and the outermost liquid tight layer 52, and functions as a combined barrier and print paper substrate. Thus, the printed décor will according to this embodiment be printed onto the barrier coated top-side surface of the high-density paper substrate.

The uncoated side of the barrier-coated paper substrate 20c from Fig. 2c, i.e. 55a of 55, is thus laminated to the outer side of the bulk layer by means of wet lamination with an intermediate bonding layer 56 of a thin layer of adhesive polymer, obtained by applying an aqueous dispersion of a PVOH or polyvinyl acetate adhesive onto one of the surfaces to be adhered to each other and subsequently pressing together in a roller nip. The dry amount applied of the intermediate bonding layer 56 is of a few g/m$^2$ only, such that there is no need for drying and evaporation.

On the inside of the bulk layer, the laminated material has a complementary barrier in the form of a vapour deposition coating onto a polymer film substrate, as used in the laminated material 40 of Fig. 4. The complementary barrier film 54, comprises a polymer film substrate 54a, being a film of biaxially oriented polypropylene, BOPP, coated with a vapour deposited barrier coating 54b, being an aluminium metallised coating. It is laminated to the inside of the bulk layer by a similar wet lamination operation to the one for lamination of the outisde of the bulk layer to the high-density paper substrate 55, but uses an acrylic adhesive 57 instead.

The innermost heat sealable layer 53 may consist of one layer or alternatively of two or more part-layers of the same or different kinds of LDPE or LLDPE or blends thereof, and is well adhered to the metallised barrier film 55, by an intermediate coextruded tie layer 58, e.g. of ethylene acrylic acid copolymer (EAA) which is applied together with the innermost layer(s) 53 in one single melt coextrusion coating step.

In an alternative embodiment, not shown, the complementary barrier on the inside of the bulk layer 51 is a further barrier-coated high-density paper as of described in 20a or 20c of Fig. 2a or2c. By such a material structure, the sandwich arrangement the barrier coated high-density paper substrates on each side may contribute with their relatively higher Young's Moduli, and compensate for a weaker bulk layer having a lower than normal bending stiffness, as well as provide a high total oxygen barrier performance.

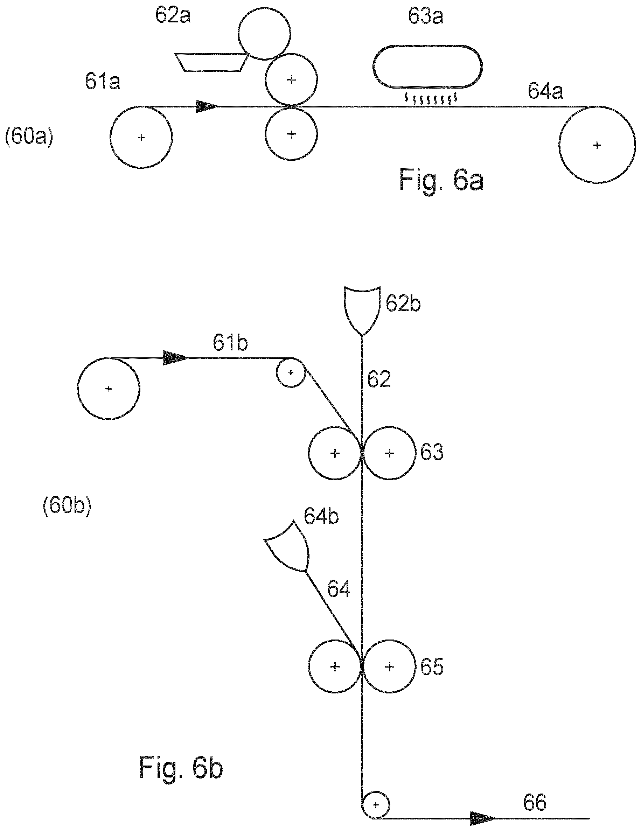

In Fig. 6a, a process of aqueous dispersion coating 60a is shown, which may be used for applying a gas barrier coating 12 from an aqueous gas barrier composition onto a substrate, or an aqueous adhesive composition for wet laminating two webs together, of which at least one web has a fibrous cellulose surface. The paper substrate web 61a (e.g. the paper substrate 11a; 11b from Fig. 1) is forwarded to the dispersion coating station 62a, where the aqueous dispersion composition is applied by means of rollers onto the top-side surface of the substrate. The aqueous composition has an aqueous content of from 80 to 99 weight-%, and there will be a lot of water on the wet coated substrate that needs to be dried by heat, and evaporated off, to form a continuous coating, which is homogenous and has an even quality with respect to barrier properties and surface properties, i.e. evenness and wettability. The drying is carried out by a hot air dryer 63a, which also allows the moisture to evaporate and be removed from the surface of the paper substrate. The substrate temperature as it travels through the dryer, is kept constant at a temperature of from 60 to 80 °C. Alternatively, dyring may be partly assisted by irradiation heat from infrared IR-lamps, in combination with hot air convection drying.

The resulting barrier-coated paper substrate web 64a is forwarded to cool off and is wounded onto a reel for intermediate storage and later further vapour deposition coating of a barrier deposition coating onto the paper substrate 61a (23a; 20b).

Fig. 6b shows a process (60b) for the final lamination steps in the manufacturing of a laminated packaging material, such as 30 or 40, of Fig. 3 and 4, respectively, after that the bulk layer 31, 41 first has been laminated to the barrier-coated paper substrate 20a, 20b, 20c of Fig. 2a-c, i.e. 35 or 44 of Fig. 3 and 4, respectively.

The bulk layer paperboard may have been laminated to the barrier-coated paper substrate by means of wet, cold dispersion adhesive lamination, or by means of melt extrusion lamination.

The resulting paper pre-laminate web 61b is forwarded from an intermediate storage reel, or directly from the lamination station for laminating the paper pre-laminate. The non-laminated side of the bulk layer 31;41, i.e. its print side, is joined at a cooled roller nip 63 to a molten polymer curtain 62 of the LDPE, which is to form the outermost layer 32; 42 of the laminated material, the LDPE being extruded from an extruder feedblock and die 62b. Subsequently, the paper pre-laminated web, now having the outermost layer 62; 32;42 coated on its printed side, i.e. the outside, passes a second extruder feedblock and die 64b and a lamination nip 65, where a molten polymer curtain 64 is joined and coated onto the other side of the pre-laminate, i.e. on the barrier-coated side of the paper substrate. Thus, the innermost heat sealable layer(s) 64: 33; 43 are coextrusion coated onto the inner side of the paper pre-laminate web, to form the finished laminated packaging material 66, which is finally wound onto a storage reel, not shown.

These two coextrusion steps at lamination roller nips 63 and 65, may alternatively be performed as two consecutive steps in the opposite order.

According to another embodiment, one or both of the outermost layers may instead be applied in a pre-lamination station, where the coextrusion coated layer is first applied to the outside of the (printed) bulk paperboard layer or onto the barrier-coated paper substrate, and thereafter the two pre-laminated paper webs may be joined to each other, as described above.

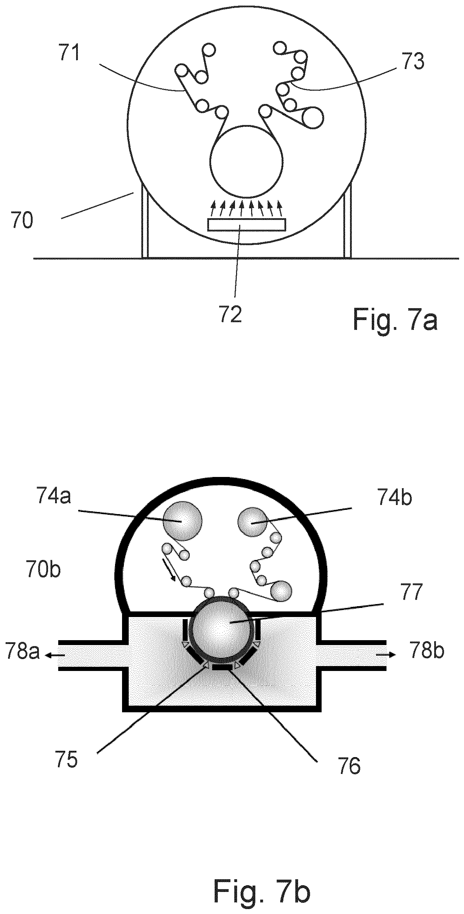

Fig. 7a is a diagrammatic view of an example of a plant 70a for physical vapour deposition, PVD, of e.g. an aluminium metal coating, onto a web substrate of the invention. The coated or uncoated high-density paper substrate 71 is subjected, on its pre-coated side, to continuous evaporation deposition 72, of evaporised aluminium, to form a metallised layer of aluminium or, alternatively to a mixture of oxygen with aluminium vapour, to form a deposited coating of aluminium oxide. The coating is provided at a thickness from 5 to 100 nm, preferably from 10 to 50 nm, so that the barrier-coated paper substrate 73 of the invention is formed. The aluminium vapour is formed from ion bombardment of an evaporation source of a solid piece of aluminium at 72. For the coating of Aluminium oxide, also some oxygen gas may be injected into the plasma chamber via inlet ports.

Fig. 7b is a diagrammatic view of an example of a plant 70b for plasma enhanced chemical vapour deposition coating, PECVD, of e.g. hydrogenated amorphous diamond-like carbon coatings onto a web substrate of the invention. The web substrate 74a is subjected, on one of its surfaces, to continuous PECVD, of a plasma, in a plasma reaction zone 75 created in the space between magnetron electrodes 76, and a chilled web-transporting drum 77, which is also acting as an electrode, while the film is forwarded by the rotating drum, through the plasma reaction zone along the circumferential surface of the drum. The plasma for deposition coating of an amorphous DLC coating layer may for example be created from injecting a gas precursor composition comprising an organic hydrocarbon gas, such as acetylene or methane, into the plasma reaction chamber. Other gas barrier coatings may be applied by the same principal PECVD method, such as silicon oxide coatings, SiOx, then starting from a precursor gas of an organosilicon compound. The PECVD plasma chamber is kept at vaccum conditions by continuously evacuating the chamber at outlet ports 78a and 78b.

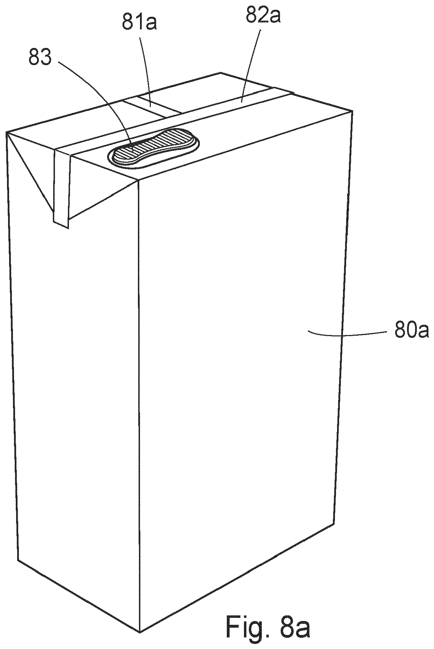

Fig. 8a shows an embodiment of a packaging container 50a produced from a packaging laminate according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 81a and 82a, respectively, and optionally an opening device 83. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still is easy to handle and dimensionally stable enough to put on a shelf in the food store or on any flat surface.

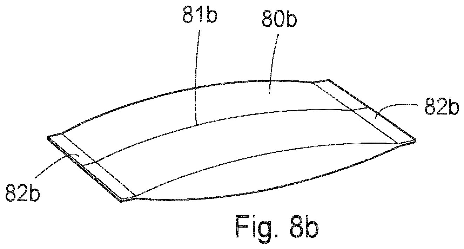

Fig. 8b shows an alternative example of a packaging container 80b produced from an alternative packaging laminate according to the invention. The alternative packaging laminate is thinner by having a thinner paper bulk layer, and thus it is not dimensionally stable enough to form a parallellepipedic or wedge-shaped packaging container, and is not fold formed after transversal sealing 82b. The packaging container will remain a pillow-shaped pouch-like container and be distributed and sold in this form.

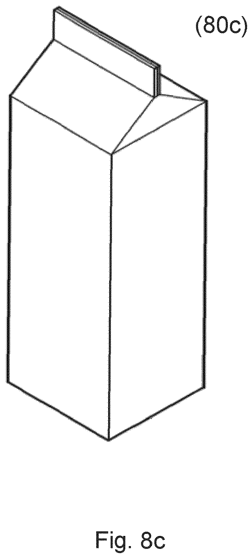

Fig. 8c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

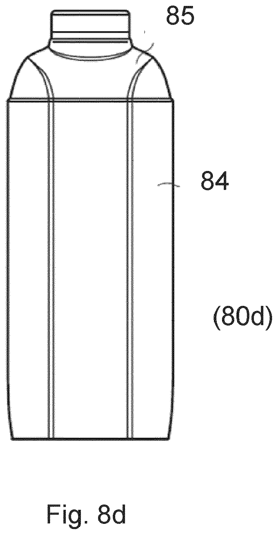

Fig. 8d shows a bottle-like package 50d, which is a combination of a sleeve 54 formed from a pre-cut blanks of the laminated packaging material of the invention, and a top 55, which is formed by injection moulding plastics in combination with an opening device such as a screw cork or the like. This type of packages are for example marketed under the trade names of Tetra Top® and Tetra Evero®. Those particular packages are formed by attaching the moulded top 55 with an opening device attached in a closed position, to a tubular sleeve 54 of the laminated packaging material, sterilizing the thus formed bottle-top capsule, filling it with the food product and finally foldforming the bottom of the package and sealing it.

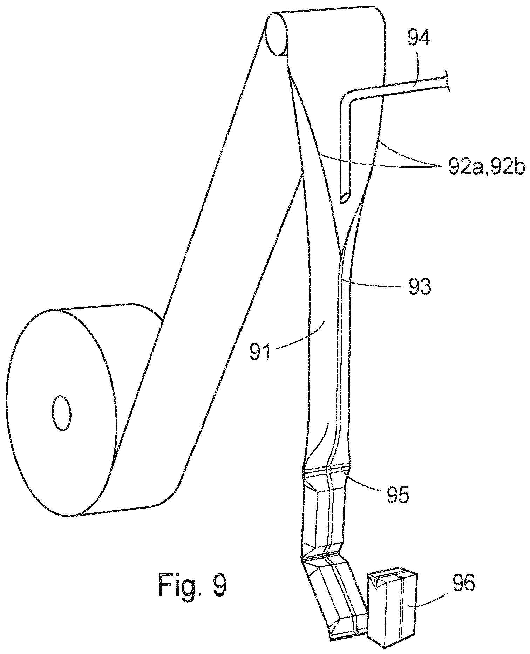

Fig. 9 shows the principle as described in the introduction of the present application, i.e. a web of packaging material is formed into a tube 91 by overlapping the longitudinal edges 92a, 92b of the web and heat sealing them to one another, to thus form an overlap joint 93. The tube is continuously filled 94 with the liquid food product to be filled and is divided into individual, filled packages by repeated, double transversal seals 95 of the tube at a pre-determined distance from one another below the level of the filled contents in the tube. The packages 96 are separated by cutting between the double transversal seals (top seal and bottom seal) and are finally shaped into the desired geometric configuration by fold formation along prepared crease lines in the material.

Fig. 10 shows a diagram comparing the loss of oxygen barrier property of a laminated material of the invention comprising the high-density paper substrate and a laminated material comprising a reference paper, and it is explained further under Example 2.

**Claims**

1. Use of a high-density paper substrate (10a; 10b) made from cellulose fibres, as a gas-barrier material in a laminated packaging material for packaging of liquid, semi-liquid or viscous food products or water, wherein the high-density paper substrate has a grammage from 30 to 75 $g/m^2$, as measured according to ISO 536:2012, a density above

1000 kg/m$^3$, as measured according to ISO 534:2011, and is impregnated (11a), at a top-side surface (12a; 12b) of the paper, with an impregnating composition comprising an impregnating polymer selected from the group consisting of polyvinyl alcohol, PVOH, ethylene vinyl alcohol, EVOH, starch, starch derivatives, carboxymethyl cellulose, nanocrystalline cellulose, NCC, and blends of two or more thereof, wherein the amount of impregnated polymer is from 0.3 to 4.0 g/m$^2$, such as from 0.5 to 3.0 g/m$^2$, dry weight.

2. Use according to claim 1, wherein the high-density paper substrate (10a; 10b) is formed from cellulose fibres comprising at least 50% by dry weight of chemical pulp, such as Kraft pulp or sulphite pulp, such as at least 75% by dry weight chemical pulp, such as at least 85% by dry weight chemical pulp, such as at least 95% by dry weight chemical pulp.

3. Use according to any one of claims 1 and 2, wherein the high-density paper substrate is formed from cellulose fibres comprising 35-100 %, such as 35-80 %, such as 40-70 % of softwood pulp, by dry weight of the pulp used to form the high-density paper, 0-65 %, such as 20-65 %, such as 30-60 % of hardwood pulp and optionally 0-15 %, such as 0-10 %, of CTMP pulp, by dry weight of the pulp used to form the high-density paper.

4. Use according to any one of the preceding claims, wherein the high-density paper substrate provides a Schopper-Riegler (°SR) number measured according to ISO 5267-1:1999 of from 30 to 50, such as from 33 to 50, such as from 35 to 45, after repulping according to ISO 5263-1:2004.

5. Use according to any one of the preceding claims, wherein the high-density paper substrate has a mean fines content measured with a L&W Fibretester+ (ABB, Lorentzen & Wettre, Sweden) of less than 40 %, such as less than 35 %, as measured according to ISO 16065-2:2014 after repulping according to ISO 5263-1:2004, wherein fines are defined as fibrous particles shorter than 0.2 mm.

6. Use according to any one of the preceding claims, wherein the cellulose fibres of the high-density paper substrate exhibit a Canadian Standard Freeness, CSF, value above 200 ml, such as from 200 to 500 ml, such as from 220 to 450 ml, such as from 300 to 450 ml, as measured according to ISO 5267-2:2001, after repulping according to the Valmet repulping method carried out in a Valmet pulper of the type HD400.

7. Use according to any one of the preceding claims, wherein the high-density paper substrate (10a; 10b) is impregnated from the top-side and subsequently calendered to a roughness of the top-side surface (12a: 12b) lower than 100 ml/min Bendtsen, such as lower than 80 ml/min, such as from 7 to 80 ml/min, such as from 7 to 70 ml/min, such as from 7 to 60 ml/min, such as from 7 to 50 ml/min, such as from 7 to 30 ml/min, such as from 7 to 20 ml/min Bendtsen, as measured according to SS-ISO 8791-2:2013.

8. Use according to any one of the preceding claims, wherein the high-density paper substrate further, at an opposite, back-side surface (14a) of the paper, is impregnated (13a) with an impregnating composition comprising an impregnating polymer selected from the same group as for the top-side surface of the paper, wherein the paper is impregnated from the back-side and subsequently calendered to a roughness of the back-side surface lower than 200 ml/min Bendtsen, such as lower than 150 ml/min Bendtsen, as measured according to SS-ISO 8791-2:2013.

9. Use according to any one of the preceding claims, wherein the impregnating composition further comprises inorganic particles selected from the group consisting of clays, such as bentonite, kaolin or baryte, and talcum, CaCOs, or silica particles, in addition to the polymer.

10. Use according to any one of the preceding claims, wherein the thickness of the high-density paper substrate is from 35 to 75 $\mu$m, such as from 35 to 65 $\mu$m, such as from 35 to 60 $\mu$m, such as from 35 to 50 $\mu$m, such as from 35 to 45 $\mu$m.

11. Use according to any one of the preceding claims, wherein the high-density paper substrate (10b) has a top ply (11b) and a bottom ply (13b).

12. Use according claim 10, wherein the top ply (11b) is formed from at least 50% by dry weight hardwood pulp, such as at least 65% by dry weight hardwood pulp, such as at least 75% by dry weight hardwood pulp.

13. Use according to any one of claims 10-11, wherein the bottom ply (13b) is formed from at least 50% by dry weight softwood pulp, such as at least 65% by dry weight softwood pulp, such as at least 75% by dry weight softwood pulp.

14. Coated high-density paper substrate (20a; 20b; 20c), for use as a gas-barrier material in a laminated packaging material for liquid, semi-liquid or viscous food products or water, the paper substrate being defined as in any one of use claims 1-13, wherein the top-side surface of the paper substrate has at least one coating (22a,24a;22b;24c) of at least one gas barrier material to a total coating thickness from 2 to 5000 nm, such as from 2 to 4000 nm.

15. Coated high-density paper substrate according to claim 14, wherein the top-side surface of the paper substrate is coated (22a;22b) to a dry coating thickness from 100 to 5000 nm (from 0,1 to 5 $\mu$m), such as from 100 to 4000 nm (from 0,1 to 4 $\mu$m), such as from 300 to 3500 nm (from 0,3 to 3,5 $\mu$m), such as from 300 to 2500 nm (from 0,3 to 2,5 $\mu$m), with a gas barrier material comprising a polymer selected from the group consisting of vinyl alcohol polymers and copolymers, such as from the group consisting of polyvinyl alcohol, PVOH, and ethylene vinyl alcohol, EVOH, starch and starch derivatives, nanofibrillar cellulose/ microfibrillar cellulose, NFC/ MFC, nanocrystalline cellulose, NCC, and blends of two or more thereof.

16. Coated high-density paper substrate according to claim 14, wherein the top-side surface of the paper substrate has a vapour deposition coating (24c) of a gas barrier material selected from metals, metal oxides, inorganic oxides and amorphous diamond-like carbon coatings.

17. Coated high-density paper substrate according to any one of claims 14-15, wherein the top-side surface of the paper substrate has a first coating (22a) of a gas barrier material formed by coating and subsequent drying of a dispersion or solution of an aqueous gas barrier composition, and further has a vapour deposition coating (24a) of a gas barrier material selected from metals, metal oxides, inorganic oxides and amorphous diamond-like carbon, applied on the first coating.

18. Laminated packaging material (30;40;50) for packaging of liquid, semi-liquid or viscous food products or water, comprising the high-density paper substrate (10a; 10b) as defined in any one of use claims 1-13 or the gas-barrier coated paper substrate (20a;20b;20c) according to any one of claims 14-17, and further comprising a first outermost layer of a liquid tight material (32;42;52) and a second innermost layer of a liquid tight material (33;43;53).

19. Laminated packaging material for packaging of liquid, semi-liquid or viscous food products or water, according to claim 18, further comprising a bulk layer (31;41;51) of paper or paperboard or other cellulose-based material and having the high-density paper substrate (10a;10b), or gas-barrier coated paper substrate (20a;20b;20c), laminated between the bulk layer and the second innermost layer.

20. Laminated packaging material according to any one of claims 18-19, wherein the high-density paper substrate, or gas-barrier coated paper substrate, is laminated to the bulk layer by from 0.5 to 5 g/m$^2$ of an interjacent bonding composition (36;46;57) comprising a binder selected from the group consisting of acrylic polymers and copolymers, starch, starch derivatives, cellulose derivatives, polymers and, copolymers of vinyl acetate, copolymers of vinyl alcohol, and copolymers of styrene-acrylic latex or styrene-butadiene latex.

21. Laminated packaging material according to any one of claims 18-20, having a pre-manufactured polymer film laminated between the high-density paper substrate or gas-barrier coated paper substrate, and the second innermost liquid tight material layer, for improved robustness of the mechanical properties of the laminated packaging material.

22. Laminated packaging material (40) according to any one of claims 18-21, having a pre-manufactured polymer film (44, 44a) laminated on the inner side of the high-density paper substrate (10a;10b) or gas-barrier coated paper substrate (20a;20b;20c), i.e. on the side of the paper substrate which is opposite to the side that is laminated to the bulk layer, wherein the pre-manufactured polymer film (44, 44a) has a vapour deposition coating (44b) of a gas barrier material selected from metals, metal oxides, inorganic oxides and amorphous diamond-like carbon coatings.

23. Laminated packaging material (50) for packaging of liquid, semi-liquid and viscous food or water, according to claim 18, further comprising a bulk layer (51) of paper or paperboard or other cellulose-based material and having the high-density paper substrate (10a;10b), or gas-barrier coated high-density paper substrate (20a;20b;20c), laminated between the bulk layer and the first outermost layer (52).

24. Laminated packaging material (50) according to claim 23, wherein the top-side surface of the high-density paper substrate (55a) is coated with an aluminium metallization coating (55b) and is directed towards the first outermost layer in the laminated packaging material.

**25.** Laminated packaging material (30;40;50) for packaging of liquid, semi-liquid and viscous food or water, according to any one of claims 18-22, comprising a further high-density paper substrate (10a;10b), or gas-barrier coated high-density paper substrate (20a;20b;20c), laminated between the bulk layer (31;41;51) and the first outermost layer (32;42;52).

**26.** Packaging container (50a; 50b; 50c; 50d) for packaging of liquid, semi-liquid or viscous food products or water, comprising the laminated packaging material (30;40;50) as defined in any one of claims 18-25.

**Patentansprüche**

**1.** Verwendung eines aus Cellulosefasern hergestellten hochdichten Papiersubstrats (10a; 10b), wie eines Gasbarrierematerials in einem laminierten Verpackungsmaterial für das Verpacken von flüssigen, halbflüssigen oder zähflüssigen Lebensmittelprodukten oder Wasser, wobei das hochdichte Papiersubstrat eine nach ISO 536:2012 gemessene flächenbezogene Masse von 30 bis 75 g/m$^2$ aufweist, eine nach ISO 534:2011 gemessene Dichte von über 1000 kg/m$^3$ aufweist, und an einer oberseitigen Oberfläche (12a; 12b) des Papiers mit einer Imprägnierzusammensetzung imprägniert (11a) ist, die ein Imprägnierpolymer ausgewählt aus der Gruppe bestehend aus Polyvinylalkohol, PVOH, Ethylenvinylalkohol, EVOH, Stärke, Stärkederivaten, Carboxymethylcellulose, nanokristalliner Cellulose, NCC, und Gemischen von zwei oder mehr derselben, umfasst, wobei die Menge des Imprägnierpolymers 0,3 bis 4,0 g/m$^2$, wie 0,5 bis 3,0 g/m$^2$, Trockengewicht beträgt.

**2.** Verwendung nach Anspruch 1, wobei das hochdichte Papiersubstrat (10a; 10b) aus Cellulosefasern ausgebildet ist, die mindestens 50 Trockengew.-% Chemiezellstoff, wie Sulfatzellstoff oder Sulfitzellstoff, wie mindestens 75 Trockengew.-% Zellstoff, wie mindestens 85 Trockengew.-% Zellstoff, wie mindestens 95 Trockengew.-% Zellstoff, umfassen.

**3.** Verwendung nach einem der Ansprüche 1 bis 2, wobei das hochdichte Papiersubstrat aus Cellulosefasern ausgebildet ist, die 35-100 %, wie 35-80 %, wie 40-70 % Nadelholzfaserstoff in Trockengewicht des zur Ausbildung des hochdichten Papiers verwendeten Faserstoffs, 0-65 %, wie 20-65 %, wie 30-60 % Laubholzfaserstoff und optional 0-15 %, wie 0-10 % CTMP-Faserstoff, in Trockengewicht des zur Ausbildung des hochdichten Papiers verwendeten Faserstoffs, umfassen.

**4.** Verwendung nach einem der vorhergehenden Ansprüche, wobei das hochdichte Papiersubstrat einen nach ISO 5267-1:1999 gemessenen Schopper-Riegler-Wert (°SR) von 30 bis 50, wie 33 bis 50, wie 35 bis 45, nach Wiederaufschlagen nach ISO 5263-1:2004 bereitstellt.

**5.** Verwendung nach einem der vorhergehenden Ansprüche, wobei das hochdichte Papiersubstrat einen mit einem L&W Fibretester+ (ABB, Lorentzen & Wettre, Schweden) gemessenen mittleren Feinstoffgehalt von unter 40 %, wie unter 35 %, gemessen nach ISO 16065-2:2014 nach Wiederaufschlagen nach ISO 5263-1:2004, aufweist, wobei die Feinstoffe definiert sind als Faserteilchen, die kürzer als 0,2 mm sind.

**6.** Verwendung nach einem der vorhergehenden Ansprüche, wobei die Cellulosefasern des hochdichten Papiersubstrats einen Wert der Canadian Standard Freeness, CSF, von über 200 ml, wie 200 bis 500 ml, wie 220 bis 450 ml, wie 300 bis 450 ml, aufweisen, gemessen nach ISO 5267-2:2001 nach Wiederaufschlagen in dem in einem Valmet-Pulper des Typs HD400 ausgeführten Valmet-Repulping-Verfahren.

**7.** Verwendung nach einem der vorhergehenden Ansprüche, wobei das hochdichte Papiersubstrat (10a; 10b) von der Oberseite her imprägniert und anschließend auf eine nach SS-ISO 8791-2:2013 gemessene Rauigkeit der oberseitigen Oberfläche (12a; 12b) von unter 100 ml/min Bendtsen, wie unter 80 ml/min, wie 7 bis 80 ml/min, wie 7 bis 70 ml/min, wie 7 bis 60 ml/min, wie 7 bis 50 ml/min, wie 7 bis 30 ml/min, wie 7 bis 20 ml/min Bendtsen, geglättet wird.

**8.** Verwendung nach einem der vorhergehenden Ansprüche, wobei das hochdichte Papiersubstrat ferner auf einer gegenüberliegenden rückseitigen Oberfläche (14a) des Papiers mit einer Imprägnierzusammensetzung, die ein aus der gleichen Gruppe wie für die oberseitige Oberfläche des Papiers ausgewähltes Imprägnierpolymer umfasst, imprägniert (13a) wird, wobei das Papier von der Rückseite her imprägniert und anschließend auf eine nach SS-ISO 8791-2:2013 gemessene Rauigkeit der rückseitigen Oberfläche von unter 200 ml/min Bendtsen, wie unter 150 ml/min Bendtsen, geglättet wird.

9. Verwendung nach einem der vorhergehenden Ansprüche, wobei die Imprägnierzusammensetzung zusätzlich zum Polymer ferner anorganische Teilchen umfasst, die aus der Gruppe bestehend aus Tonen wie Bentonit, Kaolin oder Baryt, und Talkum, CaCOs, oder Silica-Teilchen ausgewählt sind.

10. Verwendung nach einem der vorhergehenden Ansprüche, wobei die Dicke des hochdichten Papiersubstrats 35 bis 75 um, wie 35 bis 65 um, wie 35 bis 60 um, wie 35 bis 50 um, wie 35 bis 45 um, beträgt.

11. Verwendung nach einem der vorhergehenden Ansprüche, wobei das hochdichte Papiersubstrat (10b) eine obere Lage (11b) und eine untere Lage (13b) aufweist.

12. Verwendung nach Anspruch 10, wobei die obere Lage (11b) aus mindestens 50 Trockengew.-% Laubholzfaserstoff, wie mindestens 65 Trockengew.-% Laubholzfaserstoff, wie mindestens 75 Trockengew.-% Zellstoff, ausgebildet ist.

13. Verwendung nach einem der Ansprüche 10 bis 11, wobei die untere Lage (13b) aus mindestens 50 Trockengew.-% Nadelholzfaserstoff, wie mindestens 65 Trockengew.-% Nadelholzfaserstoff, wie mindestens 75 Trockengew.-% Nadelholzfaserstoff, ausgebildet ist.

14. Beschichtetes hochdichtes Papiersubstrat (20a; 20b; 20c) zur Verwendung als Gasbarrierematerial in einem laminierten Verpackungsmaterial für flüssige, halbflüssige oder zähflüssigen Lebensmittelprodukte oder Wasser, wobei das Papiersubstrat wie in einem der Verwendungsansprüche 1 bis 13 definiert ist, wobei die oberseitige Oberfläche des Papiersubstrats mindestens eine Beschichtung (22a;24a;22b;24c) aus mindestens einem Gasbarrierematerial auf eine Gesamtbeschichtungsdicke von 2 bis 5000 nm, wie 2 bis 4000 nm, aufweist.

15. Beschichtetes hochdichtes Papiersubstrat nach Anspruch 14, wobei die oberseitige Oberfläche des Papiersubstrats auf eine Trockenbeschichtungsdicke von 100 bis 5000 nm (0,1 bis 5 $\mu$m), wie 100 bis 4000 nm (0,1 bis 4 $\mu$m), wie 300 bis 3500 nm (0,3 bis 3,5 $\mu$m), wie 300 bis 2500 nm (0,3 bis 2,5 um), mit einem Gasbarrierematerial beschichtet ist, das ein Polymer umfasst, welches ausgewählt ist aus der Gruppe bestehend aus Vinylalkoholpolymeren und -copolymeren, wie aus der Gruppe bestehend aus Polyvinylalkohol, PVOH und Ethylenvinylalkohol, EVOH, Stärke und Stärkederivaten, nanofibrillärer Cellulose / mikrofibrillärer Cellulose, NFC/MFC, nanokristalliner Cellulose, NCC, und Gemischen von zwei oder mehr derselben.

16. Beschichtetes hochdichtes Papiersubstrat nach Anspruch 14, wobei die oberseitige Oberfläche des Papiersubstrats eine gasphasenabgeschiedene Beschichtung (24c) eines Gasbarrierematerials aufweist, das aus Metallen, Metalloxiden, anorganischen Oxiden und amorphen diamantähnlichen Kohlenstoffbeschichtungen ausgewählt ist.

17. Beschichtetes hochdichtes Papiersubstrat nach einem der Ansprüche 14 bis 15, wobei die oberseitige Oberfläche des Papiersubstrats eine erste Beschichtung (22a) eines Gasbarrierematerials aufweist, die durch Aufbringen und anschließendes Trocknen einer Dispersion oder Lösung einer wässrigen Gasbarrierezusammensetzung ausgebildet wird, und ferner eine auf der ersten Beschichtung aufgebrachte gasphasenabgeschiedene Beschichtung (24a) eines Gasbarrierematerials aufweist, das aus Metallen, Metalloxiden, anorganischen Oxiden und amorphem diamantähnlichem Kohlenstoff ausgewählt ist.

18. Laminiertes Verpackungsmaterial (30;40;50) zum Verpacken von flüssigen, halbflüssigen oder zähflüssigen Lebensmittelprodukten oder Wasser, umfassend das hochdichte Papiersubstrat (10a;10b) nach einem der Verwendungsansprüche 1 bis 13 oder das gasbarrierebeschichtete Papiersubstrat (20a;20b;20c) nach einem der Ansprüche 14 bis 17, und ferner umfassend eine erste außenliegende Schicht eines flüssigkeitsdichten Materials (32;42;52) und eine zweite innenliegende Schicht eines flüssigkeitsdichten Materials (33;43;53).

19. Laminiertes Verpackungsmaterial zum Verpacken von flüssigen, halbflüssigen oder zähflüssigen Lebensmittelprodukten oder Wasser nach Anspruch 18, ferner umfassend eine Volumenschicht (31; 41; 51) aus Papier oder Pappe oder einem anderen cellulosehaltigen Material und aufweisend das hochdichte Papiersubstrat (10a;10b) oder gasbarrierebeschichtete Papiersubstrat (20a;20b;20c), das zwischen der Volumenschicht und der zweiten innenliegenden Schicht einlaminiert ist.

20. Laminiertes Verpackungsmaterial nach einem der Ansprüche 18 bis 19, wobei das hochdichte Papiersubstrat oder gasbarrierebeschichtete Papiersubstrat vermittels 0,5 bis 5 g/m² einer zwischenliegenden Bindungszusammensetzung (36;46;57), die ein Bindemittel umfasst, das ausgewählt ist aus der Gruppe bestehend aus Acrylpolymeren und -copolymeren, Stärke, Stärkederivaten, Cellulosederivaten, Polymeren und Copolymeren von Vinylacetat, Copolymeren von Vinylalkohol, und Copolymeren von Styrol-Acryl-Latex oder Styrol-Butadien-Latex, auf die Volumenschicht auflaminiert ist.

21. Laminiertes Verpackungsmaterial nach einem der Ansprüche 18 bis 20, aufweisend einen vorgefertigten Polymerfilm, der zwischen das hochdichte Papiersubstrat oder gasbarrierebeschichtete Papiersubstrat und die zweite innenliegende flüssigkeitsdichte Materialschicht einlaminiert ist, zur verbesserten Standfestigkeit der mechanischen Eigenschaften des laminierten Verpackungsmaterials.

22. Laminiertes Verpackungsmaterial (40) nach einem der Ansprüche 18 bis 21, aufweisend einen vorgefertigten Polymerfilm (44, 44a), der auf die Innenseite des hochdichten Papiersubstrats (10a;10b) oder gasbarrierebeschichteten Papiersubstrats (20a;20b;20c), das heißt, auf der Seite des Papiersubstrats, die der auf die Volumenschicht auflaminierten Seite gegenüberliegt, auflaminiert ist, wobei der vorgefertigte Polymerfilm (44; 44a) eine gasphasenabgeschiedene Beschichtung (44b) eines Gasbarrierematerials aufweist, das aus Metallen, Metalloxiden, anorganischen Oxiden und amorphen diamantähnlichen Kohlenstoffbeschichtungen ausgewählt ist.

23. Laminiertes Verpackungsmaterial (50) zum Verpacken von flüssigen, halbflüssigen oder zähflüssigen Lebensmittelprodukten oder Wasser nach Anspruch 18, ferner umfassend eine Volumenschicht (51) aus Papier oder Pappe oder einem anderen cellulosehaltigen Material und aufweisend das hochdichte Papiersubstrat (10a;10b) oder gasbarrierebeschichtete hochdichte Papiersubstrat (20a;20b;20c), das zwischen die Volumenschicht und die erste außenliegende Schicht (52) einlaminiert ist.

24. Laminiertes Verpackungsmaterial (50) nach Anspruch 23, wobei die oberseitige Oberfläche des hochdichten Papiersubstrats (55a) mit einer Aluminium-Metallisierungsschicht (55b) beschichtet ist und hin zur ersten außenliegenden Schicht im laminierten Verpackungsmaterial ausgerichtet ist.

25. Laminiertes Verpackungsmaterial (30;40;50) zum Verpacken von flüssigen, halbflüssigen oder zähflüssigen Lebensmittelprodukten oder Wasser nach einem der Ansprüche 18 bis 22, umfassend ein weiteres hochdichtes Papiersubstrat (10a;10b) oder gasbarrierebeschichtetes hochdichtes Papiersubstrat (20a;20b;20c), das zwischen die Volumenschicht (31;41;51) und die erste außenliegende Schicht (32;42;52) einlaminiert ist.

26. Verpackungsbehälter (50a; 50b; 50c; 50d) zum Verpacken von flüssigen, halbflüssigen oder zähflüssigen Lebensmittelprodukten oder Wasser, umfassend das laminierte Verpackungsmaterial (30;40;50) nach einem der Ansprüche 18 bis 25.

**Revendications**

1. Utilisation d'un substrat de papier haute densité (10a ; 10b) composé de fibres de cellulose, en tant que matériau barrière aux gaz dans un matériau d'emballage stratifié pour l'emballage de produits alimentaires liquides, semi-liquides ou visqueux ou d'eau, le substrat de papier haute densité ayant un grammage de 30 à 75 g/m$^2$, comme mesuré selon la norme ISO 536:2012, une densité supérieure à 1 000 kg/m$^3$, comme mesurée selon la norme ISO 534:2011, et étant imprégné (11a), au niveau d'une surface côté supérieur (12a ; 12b) du papier, avec une composition d'imprégnation comprenant un polymère d'imprégnation choisi dans le groupe constitué par un poly(alcool vinylique), PVOH, un éthylène alcool vinylique, EVOH, un amidon, des dérivés d'amidon, une carboxyméthylcellulose, une cellulose nanocristalline, NCC et des mélanges de deux ou plus de ceux-ci, la quantité de polymère imprégné étant de 0,3 à 4,0 g/m$^2$, telle que de 0,5 à 3,0 g/m$^2$, en poids sec.

2. Utilisation selon la revendication 1, le substrat de papier haute densité (10a ; 10b) étant formé de fibres de cellulose comprenant au moins 50 % en poids sec de pâte chimique, telle qu'une pâte Kraft ou une pâte au sulfite, tel qu'au moins 75 % en poids sec de pâte chimique, tel qu'au moins 85 % en poids sec de pâte chimique, tel qu'au moins 95 % en poids sec de pâte chimique.

3. Utilisation selon l'une quelconque des revendications 1 et 2, le substrat de papier haute densité étant formé à partir de fibres de cellulose comprenant 35 à 100 %, tel que 35 à 80 %, tel que 40 à 70 % de pâte de bois tendre, par poids sec de la pâte utilisée pour former le papier haute densité, 0 à 65 %, tel que 20 à 65 %, tel que 30 à 60 % de pâte de bois dur et éventuellement 0 à 15 %, tel que 0 à 10 %, de pâte CTMP, par poids sec de la pâte utilisée pour former le papier haute densité.

**4.** Utilisation selon l'une quelconque des revendications précédentes, le substrat de papier haute densité fournissant un indice de Schopper-Riegler (°SR) mesuré selon la norme ISO 5267-1:1999 allant de 30 à 50, tel que de 33 à 50, tel que de 35 à 45, après repulpage selon la norme ISO 5263-1:2004.

**5.** Utilisation selon l'une quelconque des revendications précédentes, le substrat de papier haute densité ayant une teneur moyenne en fines mesurée avec un L&W Fibretester+ (ABB, Lorentzen & Wettre, Suède) de moins de 40 %, telle que de moins de 35 %, telle que mesurée selon la norme ISO 16065-2:2014 ou après repulpage selon la norme ISO 5263-1:2004, les fines étant définies comme des particules fibreuses plus courtes que 0,2 mm.

**6.** Utilisation selon l'une quelconque des revendications précédentes, les fibres de cellulose du substrat de papier haute densité présentant un indice d'égouttage, CSF, supérieur à 200 ml, tel que de 200 à 500 ml, tel que de 220 à 450 ml, tel que de 300 à 450 ml, tel que mesuré selon la norme ISO 5267-2:2001, après repulpage selon le procédé de repulpage Valmet réalisé dans un pulpeur Valmet du type HD400.

**7.** Utilisation selon l'une quelconque des revendications précédentes, le substrat de papier haute densité (10a ; 10b) étant imprégné depuis le côté supérieur et subséquemment calandré jusqu'à une rugosité de la surface côté supérieur (12a ; 12b) inférieure à 100 ml/min Bendtsen, telle qu'inférieure à 80 ml/min, telle que de 7 à 80 ml/min, telle que de 7 à 70 ml/min, telle que de 7 à 60 ml/min, telle que de 7 à 50 ml/min, telle que de 7 à 30 ml/min, telle que de 7 à 20 ml/min Bendtsen, telle que mesurée selon la norme SS-ISO 8791-2:2013.

**8.** Utilisation selon l'une quelconque des revendications précédentes, le substrat de papier haute densité étant en outre, au niveau d'une surface côté arrière, opposée (14a) du papier, imprégné (13a) avec une composition d'imprégnation comprenant un polymère d'imprégnation choisi dans le même groupe que pour la surface côté supérieur du papier, le papier étant imprégné depuis le côté arrière et subséquemment calandré jusqu'à une rugosité de la surface côté arrière inférieur à 200 ml/min Bendtsen, telle qu'inférieur à 150 ml/min Bendtsen, telle que mesurée selon la norme SS-ISO 8791-2 : 2013.

**9.** Utilisation selon l'une quelconque des revendications précédentes, la composition d'imprégnation comprenant en outre des particules inorganiques choisies dans le groupe constitué par des argiles, telle qu'une bentonite, un kaolin ou une baryte, et du talc, du $CaCO_3$ ou des particules de silice, en plus du polymère.

**10.** Utilisation selon l'une quelconque des revendications précédentes, l'épaisseur du substrat de papier haute densité étant de 35 à 75 $\mu$m, telle que 35 à 65 $\mu$m, telle que de 35 à 60 $\mu$m, telle que de 35 à 50 $\mu$m, telle que de 35 à 45 $\mu$m.

**11.** Utilisation selon l'une quelconque des revendications précédentes, le substrat de papier haute densité (10b) ayant une feuille supérieure (11b) et une feuille inférieure (13b).

**12.** Utilisation selon la revendication 10, la feuille supérieure (11b) étant formée d'au moins 50 % en poids sec de pâte de bois dur, tel que d'au moins 65 % en poids sec de pâte de bois dur, tel que d'au moins 75 % en poids sec de pâte de bois dur.

**13.** Utilisation selon l'une quelconque des revendications 10 à 11, la feuille inférieure (13b) étant formée d'au moins 50 % en poids sec de pâte de bois tendre, tel que d'au moins 65 % en poids sec de pâte de bois tendre, tel que d'au moins 75 % en poids sec de pâte de bois tendre.

**14.** Substrat de papier haute densité revêtu (20a ; 20b ; 20c), pour une utilisation en tant que matériau barrière aux gaz dans un matériau d'emballage stratifié pour produits alimentaires liquides, semi-liquides ou visqueux ou d'eau, le substrat de papier étant défini comme dans l'une quelconque des utilisations selon les revendications 1 à 13, la surface côté supérieur du substrat de papier ayant au moins un revêtement (22a, 24a ; 22b ; 24c) d'au moins un matériau barrière aux gaz jusqu'à une épaisseur totale de revêtement de 2 à 5 000 nm, telle que de 2 à 4 000 nm.

**15.** Substrat de papier haute densité revêtu selon la revendication 14, la surface côté supérieur du substrat de papier étant revêtue (22a ; 22b) jusqu'à une épaisseur de revêtement sec de 100 à 5 000 nm (de 0,1 à 5 $\mu$m), telle que de 100 à 4000 nm (de 0,1 à 4 $\mu$m), telle que de 300 à 3500 nm(de 0,3 à 3,5 $\mu$m), telle que de 300 à 2500 nm(de 0,3 à 2,5 $\mu$m), par un matériau barrière aux gaz comprenant un polymère choisi dans le groupe constitué par des polymères et des copolymères d'alcool vinylique, tel que dans le groupe constitué par un poly(alcool vinylique), PVOH, un éthylène alcool vinylique, EVOH, un amidon, des dérivés d'amidon, une cellulose nanofibrillaire/cellulose microfibrillaire, NFC/MFC, une cellulose nanocristalline, NCC et des mélanges de deux ou plus de ceux-ci.

**16.** Substrat de papier haute densité revêtu selon la revendication 14, la surface côté supérieur du substrat de papier ayant un revêtement à dépôt en phase vapeur (24c) d'un matériau barrière aux gaz choisi parmi des métaux, des oxydes métalliques, des oxydes inorganiques et des revêtements de carbone de type diamant amorphe.

**17.** Substrat de papier haute densité revêtu selon l'une quelconque des revendications 14 et 15, la surface côté supérieur du substrat de papier ayant un premier revêtement (22a) d'un matériau barrière aux gaz formé par revêtement et séchage subséquent d'une dispersion ou solution d'une composition aqueuse de barrière aux gaz, et en outre ayant un revêtement à dépôt en phase vapeur (24a) d'un matériau barrière aux gaz choisi parmi des métaux, des oxydes métalliques, des oxydes inorganiques et du carbone de type diamant amorphe, appliqué sur le premier revêtement.

**18.** Matériau d'emballage stratifié (30 ; 40 ; 50) pour l'emballage de produits alimentaires liquides, semi-liquides ou visqueux ou d'eau, comprenant le substrat de papier haute densité (10a ; 10b) tel que défini dans l'une quelconque des revendications 1 à 13 ou le substrat de papier haute densité revêtu (20a ; 20b ; 20c) selon l'une quelconque des revendications 14 à 17, et comprenant en outre une première couche la plus à l'extérieur d'un matériau étanche aux liquides (32 ; 42 ; 52) et une deuxième couche la plus à l'intérieur d'un matériau étanche aux liquides (33 ; 43 ; 53).

**19.** Matériau d'emballage stratifié pour l'emballage de produits alimentaires liquides, semi-liquides ou visqueux ou d'eau, selon la revendication 18, comprenant en outre une couche de masse (31 ; 41 ; 51) de papier ou de carton ou d'un autre matériau à base de cellulose et ayant le substrat de papier haute densité (10a ; 10b), ou le substrat de papier revêtu barrière aux gaz (20a ; 20b ; 20c), stratifié entre la couche de masse et la deuxième couche la plus à l'intérieur.

**20.** Matériau d'emballage stratifié selon l'une quelconque des revendications 18 et 19, le substrat de papier haute densité, ou le substrat de papier revêtu barrière aux gaz, étant stratifié sur la couche de masse par de 0,5 à 5 g/m$^2$ d'une composition de liaison interjacente (36 ; 46 ; 57) comprenant un liant choisi dans le groupe constitué par des polymères et des copolymères acryliques, un amidon, des dérivés d'amidon, des dérivés de cellulose, des polymères et des copolymères d'acétate de vinyle, des copolymères d'alcool vinylique et des copolymères de styrène-latex acrylique ou de styrène-latex de butadiène.

**21.** Matériau d'emballage stratifié selon l'une quelconque des revendications 18 à 20, ayant un film de polymère préfabriqué stratifié entre le substrat de papier haute densité ou le substrat de papier revêtu barrière aux gaz, et la deuxième couche de matériau étanche aux liquides la plus à l'intérieur, pour une robustesse améliorée des propriétés mécaniques du matériau d'emballage stratifié.

**22.** Matériau d'emballage stratifié (40) selon l'une quelconque des revendications 18 à 21, ayant un film de polymère préfabriqué (44, 44a) stratifié sur le côté intérieur du substrat de papier haute densité (10a ; 10b) ou du substrat de papier revêtu barrière aux gaz (20a ; 20b ; 20c), c'est-à-dire sur le côté du substrat de papier qui est à l'opposé du côté qui est stratifié sur la couche de masse, le film de polymère préfabriqué (44, 44a) ayant un revêtement à dépôt en phase vapeur (44b) d'un matériau barrière au gaz choisi parmi des métaux, des oxydes métalliques, des oxydes inorganiques et des revêtements de carbone de type diamant amorphe.

**23.** Matériau d'emballage stratifié (50) pour l'emballage de produits alimentaires liquides, semi-liquides ou visqueux ou d'eau, selon la revendication 18, comprenant en outre une couche de masse (51) de papier ou de carton ou d'un autre matériau à base de cellulose et ayant le substrat de papier haute densité (10a ; 10b) ou le substrat de papier haute densité revêtu barrière aux gaz (20a ; 20b ; 20c), stratifié entre la couche de masse et la première couche la plus à l'extérieur (52).

**24.** Matériau d'emballage stratifié (50) selon la revendication 23, la surface côté supérieur des substrats de papier haute densité (55a) étant revêtue par un revêtement de métallisation d'aluminium (55b) et étant dirigée vers la première couche la plus à l'extérieur dans le matériau d'emballage stratifié.

**25.** Matériau d'emballage stratifié (30 ; 40 ; 50) pour l'emballage de produits alimentaires liquides, semi-liquides ou visqueux ou d'eau, selon l'une quelconque des revendications 18 à 22, comprenant un substrat de papier haute densité (10a ; 10b) ou un substrat de papier haute densité revêtu barrière aux gaz (20a ; 20b ; 20c) supplémentaire, stratifié entre la couche de masse (31 ; 41 ; 51) et la première couche la plus à l'extérieur (32 ; 42 ; 52).

**26.** Récipient d'emballage (50a ; 50b ; 50c ; 50d) pour l'emballage de produits alimentaires liquides, semi-liquides ou visqueux ou d'eau, comprenant le matériau d'emballage stratifié (30 ; 40 ; 50) tel que défini dans l'une quelconque des revendications 18 à 25.

(10a)

12a

11a

13a

14a

Fig. 1a

(10b)

12b

11b

15b

13b

14b

Fig. 1b

Fig. 1c

Fig. 1d

Fig. 1e

(10f)

Fig. 1f

24a

(20a)                                    22a
                                         21a   } 23a

Fig. 2a

(20b)                                    22b
                                         21b

Fig. 2b

(20c)                                    24c
                                         21c

Fig. 2c

Fig. 3

Fig. 4

Fig. 5

62a

63a

61a

(60a)

64a

## Fig. 6a

62b

61b

62

(60b)

63

64b

64

65

## Fig. 6b

66

71

73

70

72

Fig. 7a

74a

74b

70b

77

78a

78b

75

76

Fig. 7b

81a   82a

83

80a

Fig. 8a

Fig. 8b

(80c)

Fig. 8c

Fig. 8d

94

92a,92b

93

91

95

96

Fig. 9

Fig. 10

**EP 4 074 892 B1**

**REFERENCES CITED IN THE DESCRIPTION**

**Patent documents cited in the description**

- WO 2011003565 A1
- WO 2017089508 A1
- WO 2017089508 A